# EUROPEAN PATENT APPLICATION

(11) **EP 3 745 759 A1**
(43) Date of publication of application: **02.12.2020**
(21) Application number: 19753764.0
(22) Date of filing: 31.01.2019
(51) Int. Cl.: H04W 16/00

(54) **METHOD, APPARATUS AND SYSTEM FOR BEAM FAILURE DETECTION**

(30) Priority: 13.02.2018 CN 201810150836
(71) Applicant: HUAWEI TECHNOLOGIES CO., LTD., Shenzhen, Guangdong 518129 (CN)
(72) Inventor: GUAN, Peng, Shenzhen, Guangdong 518129 (CN); CHEN, Lei, Shenzhen, Guangdong 518129 (CN)
(74) Representative: Pfenning, Meinig & Partner mbB
(86) International application number: PCT/CN2019/074068
(87) International publication number: WO 2019/157967

(57) **Abstract**

Embodiments of this application disclose a beam failure detection method, apparatus, and system. The terminal device obtains a periodicity of at least one beam detection signal and a quantity N of consecutive beam failure instances corresponding to a beam failure declaration, and determines a length of a beam detection interval based on the obtained periodicity of the at least one beam detection signal and the obtained quantity of consecutive beam failure instances. the beam detection signal is sent by using a beam, and one beam failure instance is that a detection result of each beam detection signal in the at least one beam detection signal does not meet a predetermined condition in at least one beam detection interval. By determining the length of the beam detection interval, the beam failure detection may be performed in the detection interval, and then a beam failure declaration is performed when a condition is met, to start a beam recovery procedure. In this technical solution, effective beam failure detection can be implemented in a manner of determining a proper length of the beam detection interval.

## Description

This application claims priority to Chinese Patent Application No. 201810150836.8, filed with the China National Intellectual Property Administration on February 13, 2018 and entitled "BEAM FAILURE DETECTION METHOD, APPARATUS, AND SYSTEM", which is incorporated herein by reference in its entirety.

### TECHNICAL FIELD

This application relates to the field of communications technologies, and in particular, to a beam-based communications technology in a communications system.

### BACKGROUND

In a mobile communications system, transmission is performed by using a beam, to be specific, a signal is sent in a specific direction in space, to achieve a higher antenna array gain. The beam may be implemented by using a technology such as beamforming (beamforming). For example, an important area in high frequency (high frequency, HF) communication is analog and digital hybrid beamforming (hybrid beamforming). In this way, loss of a high frequency signal caused by a transmission distance can be reduced, and complexity and hardware costs can be controlled within an acceptable level.

In a beam-based communications system, a transmitting side centrally transmits signals in a specific direction to obtain a beam gain, and a receiving side adjusts a beam receiving mode to obtain more signal energy as much as possible. However, due to movement, blocking, channel interference, or environment change, communication quality of a pair of transmit and receive beams that are in communication may deteriorate, or even the communication cannot be performed normally. To avoid a beam failure caused by deterioration of beam communication quality, user equipment (user equipment, UE for short) needs to detect a beam. When a physical layer of the UE determines, within a beam detection interval (which may correspond to a reporting periodicity), that a detected beam does not meet a predetermined condition, a beam failure instance is generated, and the beam failure instance is reported to a higher layer of the UE in the reporting periodicity. When the detected beam consecutively does not meet the predetermined condition (that is, a beam failure instance is consecutively generated), the UE may determine that a beam failure occurs, and enter a beam recovery procedure. The beam recovery procedure includes steps such as identification of a new beam, sending of a beam failure recovery request, and reception of a beam failure acknowledgment.

For beam failure detection, to perform effective beam failure detection, it is necessary to set a proper length of the beam detection interval (which may correspond to one reporting periodicity). If the length of the beam detection interval is set too long, it takes a long time from consecutively generating beam failure instances to determining that the beam failure occurs, and consequently, beam recovery cannot be effectively performed in a timely manner. In addition, a longer time indicates lower flexibility. If the length of the beam detection interval is set too short, whether the beam failure occurred may be incorrectly determined. Therefore, a solution for determining a proper length of the beam detection interval (which may correspond to one reporting periodicity) needs to be urgently provided.

### SUMMARY

This application provides a beam failure detection method, apparatus, and system. Beam failure detection can be effectively performed by using a solution in which a length of a proper beam detection interval (which may correspond to one reporting period) is effectively determined.

According to a first aspect, a beam failure detection method and apparatus are provided.

In a possible design, the method is applied to a terminal device. A proper length of a beam detection interval is determined by obtaining a valid parameter, to implement effective beam failure detection. The method includes obtaining a periodicity T of at least one beam detection signal and a quantity N of consecutive beam failure instances corresponding to a beam failure declaration, where the beam detection signal is sent by using a beam, and one beam failure instance is that a detection result of each beam detection signal in the at least one beam detection signal does not meet a predetermined condition in at least one beam detection interval; and determining a length of the beam detection interval based on the obtained T and N.

In this design, a proper length of the beam detection interval can be determined by obtaining a valid parameter, to implement effective beam failure detection.

In a possible design, the periodicity T of the at least one beam detection signal and/or the quantity N of consecutive beam failure instances corresponding to the beam failure declaration are/is received from an access node.

In a possible design, the periodicity T of the at least one beam detection signal and/or the quantity N of consecutive beam failure instances corresponding to the beam failure declaration are/is obtained by reading from a storage apparatus.

In a possible design, the at least one beam detection signal is a beam detection signal in a beam detection signal set *q̅*₀, and the set may be configured by the access node for the UE by using higher layer signaling (RRC) for beam failure detection. Optionally, when the beam failure detection is performed, a manner of determining a beam detection signal that needs to be measured in *q̅*₀ is: measuring a beam detection signal that meets a spatial quasi-co-location relationship with a DMRS of a PDCCH in *q̅*₀, and another manner is measuring all beam detection signals in *q̅*₀.

In a possible design, the set *q̅*₀ is determined by the terminal device according to a related indication of a downlink physical channel, to include a beam detection signal that has a spatial QCL relationship with the channel, to form the set.

In a possible design, if a shortest periodicity and a longest periodicity of detection signals that need to be measured in the set *q̅*₀ are Tₛₕₒᵣₜ and T_{long}, the UE may assume that Tₛₕₒᵣₜ x N being greater than or equal to T_{long} x k is always true. Alternatively, the UE may assume that periods of reference signals that need to be measured in *q̅*₀ are the same.

In a possible design, a beam is in a one-to-one correspondence with the beam detection signal, and the beam detection signal is sent by using the corresponding beam. Optionally, one beam detection signal is sent by using a plurality of beams. Optionally, a plurality of beam detection signals are sent by using one beam. The beam detection signal includes but is not limited to a reference signal RS, a synchronization signal block, and a signal used to evaluate beam quality.

In a possible design, the periodicity T of the at least one beam detection signal includes: a periodicity Tₛₕₒᵣₜ of a beam detection signal with a shortest periodicity in the at least one beam detection signal and/or a periodicity T_{long} of a beam detection signal with a longest periodicity in the at least one beam detection signal. The determining a length of the beam detection interval based on the obtained T and N includes: determining the length of the beam detection interval based on Tₛₕₒᵣₜ and/or T_{long} and N.

In a possible design, the determined length of the beam detection interval includes one of the following: ┌T_{long}/N┐, T_{long}/N, Tₛₕₒᵣₜ x ┌(T_{long}/N/Tₛₕₒᵣₜ)┐, max{Tₛₕₒᵣₜ x ┌(T_{long}/N/Tₛₕₒᵣₜ)┐, T'}, max{Tₛₕₒᵣₜ, ┌T_{long}/N┐}, max{Tₛₕₒᵣₜ, T_{long}/N}, max{max{Tₛₕₒᵣₜ, ┌T_{long}/N┐}, T'}, max{max{Tₛₕₒᵣₜ, T_{long}/N}, T'}, min{T_{long}, Tₛₕₒᵣₜ x N}, and max{Tₛₕₒᵣₜ, ┌T_{long}/N/T'┐ x T'}, where T' is a predetermined duration value, a symbol max{ } indicates taking a maximum value, min{ } indicates taking a minimum value, and a symbol ┌ ┐ indicates rounding up. The T' may be a duration value specified in a standard, may be configured by the access node for the terminal device, or may be a value determined based on different subcarrier spacings.

In a possible design, the method further includes: obtaining an adjustment amount k. The determining a length of the beam detection interval based on the obtained T and N includes: determining the length of the beam detection interval based on T, N, and k.

In a possible design, the periodicity T of the at least one beam detection signal includes: a periodicity Tₛₕₒᵣₜ of a beam detection signal with a shortest periodicity in the at least one beam detection signal and/or a periodicity T_{long} of a beam detection signal with a longest periodicity in the at least one beam detection signal. The determined length of the beam detection interval includes one of the following: [k x T_{long}/N┐, k x T_{long}/N, Tₛₕₒᵣₜ x [(k x T_{long}/N/Tₛₕₒᵣₜ)], max{Tₛₕₒᵣₜ x [(k x T_{long}/N/Tₛₕₒᵣₜ)┐, T'}, max{Tₛₕₒᵣₜ, ┌k x T_{long}/N┐}, max{Tₛₕₒᵣₜ, k x T_{long}/N}, max{max{Tₛₕₒᵣₜ, ┌k x T_{long}/N┐}, T'}, max{max{Tₛₕₒᵣₜ, k x T_{long}/N}, T'}, min{T_{long}, Tₛₕₒᵣₜ x N x k}, max{Tₛₕₒᵣₜ, ┌k x T_{long}/N/T'┐ x T'}, where T' is a predetermined duration value, a symbol max{ } indicates taking a maximum value, min{ } indicates taking a minimum value, and a symbol ┌ ┐ indicates rounding up. The T' may be a duration value specified in a standard, may be configured by the access node for the terminal device, or may be a value determined based on different subcarrier spacings.

In a possible design, the beam detection is detection of a beam for physical downlink control channel PDCCH. Optionally, if the PDCCH corresponds to at least one control resource set CORESET, beam indications of each CORESET correspond to one activated TCI state. Beam indications of different CORESETs correspond to a same TCI state or different TCI states. For each TCI state, one or more beam detection signals in the beam detection signals that need to be measured have a QCL relationship with the CORESET associated with the TCI state. In the foregoing possible designs, Tₛₕₒᵣₜ and/or T_{long} are/is determined from a set Q formed by a periodicity of a beam detection signal with a shortest periodicity in at least one beam detection signal corresponding to each CORESET, where the correspondence includes a correspondence of the QCL relationship.

In the foregoing possible designs, it is ensured that a proper length of the beam detection interval is determined, to implement effective beam detection.

Correspondingly, a beam failure detection apparatus is provided. The apparatus may implement the corresponding method in the first aspect. For example, the apparatus is an apparatus with a specific function, and may be an entity on a terminal side. A specific implementation of the apparatus may be a terminal device. For example, the apparatus may be a terminal device, or a chip or a functional module in a terminal device. The method may be implemented by software or hardware, or by hardware executing corresponding software.

In a possible design, the apparatus may include a processor and a memory. The processor is configured to support the apparatus in performing a corresponding function in the method according to the first aspect. The memory is configured to couple to the processor, and stores a program (instruction) and data that are necessary for the apparatus. In addition, the apparatus may further include a communications interface, configured to support communication between the apparatus and another network element. The communications interface may be a transceiver.

In a possible design, the apparatus may include a transceiver unit. The transceiver unit is configured to communicate with a network device. The apparatus may further include a processing unit. The processing unit is configured to: obtain the periodicity T and the quantity N (optionally, k), and determine the length of the beam detection interval.

According to a second aspect, a beam failure detection method and apparatus are provided.

In a possible design, the method is applied to a network device, for example, an access node, or a transmission and reception point having some functions of an access node on a network side. The network device sends, to the terminal device, the configuration information used for beam failure detection, to implement beam failure detection of the terminal device. The method includes: generating adjustment amount information, where the adjustment amount information is used by a terminal device to adjust a length of a beam detection interval; and sending the adjustment amount information to the terminal device.

In this design, a proper length of the beam detection interval can be determined by configuring, by the access node, the adjustment amount information used to adjust the length of the beam detection interval, to implement effective beam failure detection.

In a possible design, the method further includes: generating information about a periodicity T of at least one beam detection signal and/or information about a quantity N of consecutive beam failure instances corresponding to a beam failure declaration; and sending T and/or N to the terminal device.

Further, in a possible design, the periodicity T of the at least one beam detection signal includes: a periodicity Tₛₕₒᵣₜ of a beam detection signal with a shortest periodicity in the at least one beam detection signal and/or a periodicity T_{long} of a beam detection signal with a longest periodicity in the at least one beam detection signal. The length of the beam detection interval determined by the terminal includes one of the following: ┌k x T_{long}/N┐, k x T_{long}/N, Tₛₕₒᵣₜ x [(k x T_{long}/N/Tₛₕₒᵣₜ)┐, max{Tₛₕₒᵣₜ x [(k x T_{long}/N/Tₛₕₒᵣₜ)┐, T'}, max{Tₛₕₒᵣₜ, ┌k x T_{long}/N┐}, max{Tₛₕₒᵣₜ, k x T_{long}/N}, max{max{Tₛₕₒᵣₜ, ┌k x T_{long}/N┐}, T'}, max{max{Tₛₕₒᵣₜ, k x T_{long}/N}, T'}, min{T_{long}, Tₛₕₒᵣₜ x N x k}, max{Tₛₕₒᵣₜ, [k x T_{long}/N/T'┐ x T'}, where T' is a predetermined duration value, a symbol max{ } indicates taking a maximum value, min{ } indicates taking a minimum value, and a symbol ┌ ┐ indicates rounding up. The T' may be a duration value specified in a standard, may be configured by the access node for the terminal device, or may be a value determined based on different subcarrier spacings.

In a possible design, the method further includes: configuring a beam detection signal set *q̅*₀ for the terminal device. The at least one beam detection signal is a beam detection signal in a beam detection signal set *q̅*₀. Optionally, the set may be configured by the access node for the UE by using higher layer signaling (for example, RRC).

In a possible design, if a shortest periodicity and a longest periodicity of detection signals that need to be measured in the set *q̅*₀ are Tₛₕₒᵣₜ and T_{long}, the UE may assume that Tₛₕₒᵣₜ x N being greater than or equal to T_{long} x k is always true. Alternatively, the UE may assume that periods of reference signals that need to be measured in *q̅*₀ are the same.

In a possible design, the method further includes: sending a beam detection signal to the terminal device. Optionally, a beam is in a one-to-one correspondence with the beam detection signal, and the beam detection signal is sent by using the corresponding beam. Optionally, one beam detection signal is sent by using a plurality of beams. Optionally, a plurality of beam detection signals are sent by using one beam. The beam detection signal includes but is not limited to a reference signal RS, a synchronization signal block, and a signal used to evaluate beam quality.

Correspondingly, a beam failure detection apparatus is provided. The apparatus may implement the corresponding method in the second aspect. For example, the apparatus is limited in a functional form, and may be an entity on an access side. A specific implementation of the apparatus may be a measurement device. For example, the apparatus may be an access node device, or may be a chip or a functional module in an access node device. The method may be implemented by using software, hardware, or by executing corresponding software by hardware.

In a possible design, the apparatus may include a processor and a memory. The processor is configured to support the apparatus in performing a corresponding function in the method according to the second aspect. The memory is configured to couple to the processor, and stores a program (instruction) and data that are necessary for the apparatus. In addition, the apparatus may further include a communications interface, configured to support communication between the apparatus and another network element. The communications interface may be a transceiver.

In a possible design, the apparatus may include a transceiver unit. The transceiver unit is configured to send, to the terminal device, related information used for beam failure detection. The apparatus may further include a processing unit, and the processing unit is configured to generate related information used for beam failure detection.

According to a third aspect, a beam failure detection method and apparatus are provided.

In a possible design, the method is applied to a terminal device. A proper length of a beam detection interval can be determined by considering a detection periodicity of a CORESET, to implement effective beam failure detection. The method includes: obtaining a detection periodicity Tc of at least one control resource set CORESET used for beam detection and a quantity N of consecutive beam failure instances corresponding to a beam failure declaration; and determining the length of the beam detection interval based on the obtained Tc and N.

In this design, a proper length of the beam detection interval is determined by obtaining the detection periodicity Tc of the at least one control resource set CORESET used for beam detection and the quantity N of consecutive beam failure instances corresponding to the beam failure declaration, to implement effective beam failure detection.

In a possible design, the periodicity Tc and/or the quantity N are/is obtained by receiving from an access node.

In a possible design, the periodicity Tc and/or the quantity N are/is obtained by reading from a storage apparatus.

In a possible design, Tc includes a shortest detection periodicity Tₛₕₒᵣₜ in detection periods of the at least one CORESET and/or a longest detection periodicity T_{long} in the detection periods of the at least one CORESET. The determining a length of the beam detection interval based on the obtained Tc and N includes: determining the length of the beam detection interval based on Tₛₕₒᵣₜ and/or T_{long} and N.

Further, in a possible design, the determined length of the beam detection interval includes one of the following: ┌T_{long}/N┐, T_{long}/N, Tₛₕₒᵣₜ x ┌(T_{long}/N/Tₛₕₒᵣₜ)┐, max{Tₛₕₒᵣₜ x ┌(T_{long}/N/Tₛₕₒᵣₜ)┐, T'}, max{Tₛₕₒᵣₜ, ┌T_{long}/N┐}, max{Tₛₕₒᵣₜ, T_{long}/N}, max{max{Tₛₕₒᵣₜ, ┌T_{long}/N┐}, T'}, max{max{Tₛₕₒᵣₜ, T_{long}/N}, T'}, min{T_{long}, Tₛₕₒᵣₜ x N), and max{Tₛₕₒᵣₜ, ┌T_{long}/N/T'┐ x T'}, where T' is a predetermined duration value, a symbol max{ } indicates taking a maximum value, min{ } indicates taking a minimum value, and a symbol ┌ ┐ indicates rounding up. It may be understood that optionally, T' may be a duration value specified in a standard, may be configured by the access node for the terminal device, or may be a value determined based on different subcarrier spacings.

In a possible design, the method further includes: obtaining an adjustment amount k. The determining a length of the beam detection interval based on the obtained Tc and N includes: determining the length of the beam detection interval based on Tc, N, and k.

Further, in a possible design, Tc includes a shortest detection periodicity Tₛₕₒᵣₜ in the detection periods of the at least one CORESET and/or a longest detection periodicity T_{long} in the detection periods of the at least one CORESET. The determining a length of the beam detection interval based on the obtained Tc and N includes: determining the length of the beam detection interval based on Tₛₕₒᵣₜ and/or T_{long} and N. The determined length of the beam detection interval includes one of the following: [k x T_{long}/N┐, k x T_{long}/N, Tₛₕₒᵣₜ x ┌(k x T_{long}/N/Tₛₕₒᵣₜ)┐ max{Tₛₕₒᵣₜ x ┌(k x T_{long}/N/Tₛₕₒᵣₜ)┐, T'}, max{Tₛₕₒᵣₜ, ┌k x T_{long}/N┐}, max{Tₛₕₒᵣₜ, k x T_{long}/N}, max{max{Tₛₕₒᵣₜ, ┌k x T_{long}/N┐}, T'}, max{max{Tₛₕₒᵣₜ, k x T_{long}/N}, T'}, min{T_{long}, Tₛₕₒᵣₜ x N x k}, max{Tₛₕₒᵣₜ, ┌k x T_{long}/N/T'┐ x T'}, where T' is a predetermined duration value, a symbol max{ } indicates taking a maximum value, min{ } indicates taking a minimum value, and a symbol ┌ ┐ indicates rounding up. The T' may be a duration value specified in a standard, may be configured by the access node for the terminal device, or may be a value determined based on different subcarrier spacings.

Correspondingly, a beam failure detection apparatus is provided. The apparatus may implement the corresponding method in the third aspect. For example, the apparatus is limited in a functional form, and may be an entity on a terminal side. A specific implementation of the apparatus may be a terminal device. For example, the apparatus may be a terminal device, or a chip or a functional module in a terminal device. The method may be implemented by software or hardware, or by hardware executing corresponding software.

In a possible design, the apparatus may include a processor and a memory. The processor is configured to support the apparatus in performing a corresponding function in the method according to the third aspect. The memory is configured to couple to the processor, and stores a program (instruction) and data that are necessary for the apparatus. In addition, the apparatus may further include a communications interface, configured to support communication between the apparatus and another network element. The communications interface may be a transceiver.

In a possible design, the apparatus may include a transceiver unit. The transceiver unit is configured to communicate with a network device. The apparatus may further include a processing unit. The processing unit is configured to: obtain the periodicity Tc and the quantity N (optionally, k), and determine the length of the beam detection interval.

According to a fourth aspect, a beam failure detection method and apparatus are provided.

In a possible design, the method is applied to a terminal device. A proper length of a beam detection interval can be determined by considering related time information Tf used for beam detection, to implement effective beam failure detection. The method includes: obtaining the related time information Tf used for beam detection; and determining the length of the beam detection interval based on the obtained Tf. Optionally, Tf includes at least one of the following: a periodicity T of at least one beam detection signal, a detection periodicity Tc of at least one CORESET, and a value Ts determined based on different subcarrier spacings SCSs.

In this design, the proper length of a beam detection interval can be determined by considering the related time information Tf used for beam detection, to implement effective beam failure detection.

In a possible design, Tf is obtained by receiving from the access node.

In a possible design, Tf is obtained by reading from a storage apparatus.

In a possible design, if Tf includes Ts, the determined length of the beam detection interval may include Ts, max{Ts, T'}, min{Ts, T'}, max{k x Ts, T'} or min{k x Ts, T'}, where T' is a fixed value and may be preset, and k is an adjustment amount and may be obtained in advance.

In a possible design, if Tf includes T, the determined length of the beam detection interval may include Tₛₕₒᵣₜ, T_{long} k x Tₛₕₒᵣₜ, k x T_{long}, max{T_{long}, T'}, max{k x T_{long}, T'}, min{T_{long}, T'} or min{k x T_{long}, T'}, where T' is a fixed value and may be preset, k is an adjustment amount and may be obtained in advance, and T includes a periodicity T_{long} of a beam detection signal with a longest periodicity in the at least one beam detection signal.

In a possible design, if Tf includes Tc, the determined length of the beam detection interval may include Tₛₕₒᵣₜ, T_{long} k x Tₛₕₒᵣₜ, k x T_{long}, max{T_{long}, T'}, max{k x T_{long}, T'}, min{T_{long}, T'} or min{k x T_{long}, T'}, where T' is a fixed value and may be preset, k is an adjustment amount and may be obtained in advance, and T includes a longest detection periodicity T_{long} in detection periods of the at least one CORESET.

In a possible design, if Tf includes Ts and T/Tc, the determined length of the beam detection interval may include max{T_{long},Ts}, max{k x T_{long}, Ts}, min{T_{long}, Ts}, min{k x T_{long}, Ts}, max{T_{long}, Ts, T'}, max{k x T_{long}, Ts, T'}, min{T_{long}, Ts, T'} or min{k x T_{long}, Ts, T'}. When Tf includes T, T_{long} corresponds to a periodicity T of a beam detection signal, and when Tf includes Tc, T_{long} corresponds to the detection periodicity Tc of the CORESET. T' is a fixed value and may be preset, and k is an adjustment amount and may be obtained in advance.

Correspondingly, a beam failure detection apparatus is provided. The apparatus may implement the corresponding method in the fourth aspect. For example, the apparatus is limited in a functional form, and may be an entity on a terminal side. A specific implementation of the apparatus may be a terminal device. For example, the apparatus may be a terminal device, or a chip or a functional module in a terminal device. The method may be implemented by software or hardware, or by hardware executing corresponding software.

In a possible design, the apparatus may include a processor and a memory. The processor is configured to support the apparatus in performing a corresponding function in the method according to the fourth aspect. The memory is configured to couple to the processor, and stores a program (instruction) and data that are necessary for the apparatus. In addition, the apparatus may further include a communications interface, configured to support communication between the apparatus and another network element. The communications interface may be a transceiver.

In a possible design, the apparatus may include a transceiver unit. The transceiver unit is configured to communicate with a network device. The apparatus may further include a processing unit. The processing unit is configured to obtain Tf, and determine the length of the beam detection interval.

According to a fifth aspect, a beam monitoring method and apparatus are provided.

In a possible design, the method is applied to a terminal device. The method includes: monitoring a beam failure interval, and performing beam failure declaration if it is monitored that a quantity of consecutive beam failure intervals reaches a predetermined quantity threshold N. In each beam failure interval, each used beam in a used beam set is in an abnormal state. The used beam set includes at least one used beam. The length of the beam failure interval is determined based on a reference time corresponding to the at least one used beam and the predetermined quantity threshold N.

In a possible design, the reference time includes a periodicity T of a beam detection signal resource corresponding to the used beam.

In a possible design, the reference time includes a detection periodicity Tc of a CORESET described in the third aspect.

In a possible design, the reference time includes the related time Tf described in the fourth aspect.

In this design, effective beam monitoring is implemented by using a proper length of the beam failure interval.

In a possible design, the reference time and/or N are/is obtained by receiving from an access node.

In a possible design, the reference time and/or N are/is obtained by reading from a storage apparatus.

If the reference time includes a periodicity T of a beam detection signal resource corresponding to the used beam, in a possible design, the periodicity T of the at least one beam detection signal includes: a periodicity Tₛₕₒᵣₜ of a beam detection signal with a shortest periodicity in the at least one beam detection signal and/or a periodicity T_{long} of a beam detection signal with a longest periodicity in the at least one beam detection signal. The length of the beam failure interval includes one of the following: ┌T_{long}/N┐, T_{long}/N Tshort x ┌(T_{long}/N/Tₛₕₒᵣₜ)┐, max{Tₛₕₒᵣₜ x ┌(T_{long}/N/Tₛₕₒᵣₜ)┐, T'}, max{Tₛₕₒᵣₜ, ┌T_{long}/N┐}, max{Tₛₕₒᵣₜ, T_{long}/N}, max{max{Tₛₕₒᵣₜ, ┌T_{long}/N┐}, T'}, max{max{Tₛₕₒᵣₜ, T_{long}/N}, T'}, min{T_{long}, Tₛₕₒᵣₜ x N}, and max{Tₛₕₒᵣₜ, ┌T_{long}/N/T'┐ x T'}, where T' is a predetermined duration value, a symbol max{ } indicates taking a maximum value, min{ } indicates taking a minimum value, and a symbol ┌ ┐ indicates rounding up. The T' may be a duration value specified in a standard, may be configured by the access node for the terminal device, or may be a value determined based on different subcarrier spacings.

If the reference time includes a periodicity T of a beam detection signal resource corresponding to the used beam, in a possible design, the length of the beam failure interval includes one of the following: ┌k x T_{long}/N┐, k x T_{long}/N, Tₛₕₒᵣₜ x ┌(k x T_{long}/N/Tₛₕₒᵣₜ)┐, max{Tₛₕₒᵣₜ x ┌(k x T_{long}/N/Tₛₕₒᵣₜ)┐, T'}, max{Tₛₕₒᵣₜ, ┌k x T_{long}/N┐}, max{Tₛₕₒᵣₜ, k x T_{long}/N}, max{max{Tₛₕₒᵣₜ, ┌k x T_{long}/N┐}, T'}, max{max{Tₛₕₒᵣₜ, k x T_{long}/N}, T'}, min{T_{long}, Tₛₕₒᵣₜ x N x k}, max{Tₛₕₒᵣₜ, ┌k x T_{long}/N/T'┐ x T'}, where T' is a predetermined duration value, a symbol max{ } indicates taking a maximum value, min{ } indicates taking a minimum value, and a symbol ┌ ┐ indicates rounding up. The T' may be a duration value specified in a standard, may be configured by the access node for the terminal device, or may be a value determined based on different subcarrier spacings. k is an adjustment amount.

If the reference time includes the detection periodicity Tc of the CORESET, in a possible design, the periodicity Tc of the at least one beam detection signal includes a shortest detection periodicity Tₛₕₒᵣₜ of the CORESET and/or a longest detection periodicity T_{long} of the CORESET. The length of the beam failure interval includes one of the following: ┌T_{long}/N┐, T_{long}/N, Tₛₕₒᵣₜ x ┌(T_{long}/N/Tₛₕₒᵣₜ)┐, max{Tₛₕₒᵣₜ x ┌(T_{long}/N/Tₛₕₒᵣₜ)┐, T'}, max{Tₛₕₒᵣₜ, ┌T_{long}/N┐}, max{Tₛₕₒᵣₜ, T_{long}/N}, max{max{Tₛₕₒᵣₜ, ┌T_{long}/N┐}, T'}, max{max{Tₛₕₒᵣₜ, T_{long}/N}, T'}, min{T_{long}, Tₛₕₒᵣₜ x N}, and max{Tₛₕₒᵣₜ, ┌T_{long}/N/T'┐ x T'}, where T' is a predetermined duration value, a symbol max{ } indicates taking a maximum value, min{ } indicates taking a minimum value, and a symbol ┌ ┐ indicates rounding up. The T' may be a duration value specified in a standard, may be configured by the access node for the terminal device, or may be a value determined based on different subcarrier spacings.

If the reference time includes the detection periodicity Tc of the CORESET, in a possible design, the periodicity Tc of the at least one beam detection signal includes a shortest detection periodicity Tₛₕₒᵣₜ of the CORESET and/or a longest detection periodicity T_{long} of the CORESET. The length of the beam failure interval includes one of the following: ┌k x T_{long}/N┐, k x T_{long}/N, Tₛₕₒᵣₜ x ┌(k x T_{long}/N/Tₛₕₒᵣₜ)], max{Tₛₕₒᵣₜ x ┌(k x T_{long}/N/Tₛₕₒᵣₜ)┐, T'}, max{Tₛₕₒᵣₜ, ┌k x T_{long}/N┐}, max{Tₛₕₒᵣₜ, k x T_{long}/N}, max{max{Tₛₕₒᵣₜ, ┌k x T_{long}/N┐}, T'}, max{max{Tₛₕₒᵣₜ, k x T_{long}/N}, T'}, min{T_{long}, Tₛₕₒᵣₜ x N x k}, max{Tₛₕₒᵣₜ, ┌k x T_{long}/N/T'┐ x T'}, where T' is a predetermined duration value, a symbol max{ } indicates taking a maximum value, min{ } indicates taking a minimum value, and a symbol ┌ ┐ indicates rounding up. The T' may be a duration value specified in a standard, may be configured by the access node for the terminal device, or may be a value determined based on different subcarrier spacings. k is an adjustment amount.

Correspondingly, a beam monitoring apparatus is provided. The apparatus may implement the corresponding method in the fifth aspect. For example, the apparatus is limited in a functional form, and may be an entity on a terminal side. A specific implementation of the apparatus may be a terminal device. For example, the apparatus may be a terminal device, or a chip or a functional module in a terminal device. The method may be implemented by software or hardware, or by hardware executing corresponding software.

In a possible design, the apparatus may include a processor and a memory. The processor is configured to support the apparatus in performing a corresponding function in the method according to the fifth aspect. The memory is configured to couple to the processor, and stores a program (instruction) and data that are necessary for the apparatus. In addition, the apparatus may further include a communications interface, configured to support communication between the apparatus and another network element. The communications interface may be a transceiver.

In a possible design, the apparatus may include a transceiver unit. The transceiver unit is configured to communicate with a network device. The apparatus may further include a processing unit. The processing unit is configured to detect the beam failure interval to determine whether to perform beam failure declaration.

This application further provides a computer storage medium, and the computer storage medium stores a computer program (instruction). When the program (instruction) is run on a computer, the computer is enabled to perform the method according to any one of the foregoing aspects.

This application further provides a computer program product. When the computer program product is run on a computer, the computer is enabled to perform the method according to any one of the foregoing aspects.

This application further provides a chip for beam failure detection. The chip stores an instruction. When the instruction is run on a communications device, the communications device is enabled to perform the corresponding methods according to the foregoing aspects.

This application further provides an apparatus for beam failure detection. The apparatus includes a memory, a processor, and a computer program that is stored in the memory and that can be run on the processor. When executing the computer program, the processor implements the corresponding methods according to the foregoing aspects.

This application further provides an apparatus for beam failure detection. The apparatus includes a processor. The processor is configured to: couple to a memory, read an instruction in the memory, and implement, according to the instruction, the corresponding methods according to the foregoing aspects. It may be understood that the memory may be integrated into the processor, or may exist independent of the processor.

This application further provides an apparatus for beam failure detection. The apparatus includes a processor. When executing a computer program, the processor implements the corresponding methods according to the foregoing aspects. The processor may be a dedicated processor.

This application further provides a beam failure detection system, including the foregoing provided terminal-side apparatus and the foregoing provided network-side apparatus. These systems separately implement the corresponding methods according to the foregoing aspects.

It may be understood that any apparatus, computer storage medium, computer program product, chip, or system provided above is configured to implement the corresponding method provided above. Therefore, for beneficial effects that can be achieved by the apparatus, computer storage medium, computer program product, chip, or system, refer to beneficial effects of the corresponding method, and details are not described herein again.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the embodiments of this application and these accompanying drawings without creative efforts.
FIG. 1 shows an architecture of a network system in this application;
FIG. 2 is a flowchart of a first embodiment of a method for beam failure detection according to this application;
FIG. 3 is a flowchart of a second embodiment of a method for beam failure detection according to this application;
FIG. 4 is a flowchart of a first embodiment of another method for beam failure detection according to this application;
FIG. 5 is a flowchart of a first embodiment of another method for beam failure detection according to this application;
FIG. 6 is a flowchart of a first embodiment of a method for beam monitoring according to this application;
FIG. 7 is a simplified schematic structural diagram of a terminal device according to this application; and
FIG. 8 is a simplified schematic structural diagram of a network device according to this application.

### DESCRIPTION OF EMBODIMENTS

To make the technical problems resolved, the technical solutions used, and the technical effects achieved in this application clearer, the following describes the technical solutions in this application with reference to the accompanying drawings in the embodiments. The detailed descriptions provide various embodiments of a device and/or a process by using block diagrams, flowcharts, and/or examples. These block diagrams, flowcharts, and/or examples include one or more functions and/or operations, so persons in the art may understand that each function and/or operation in the block diagrams, the flowcharts, and/or the examples may be performed independently and/or jointly by using much hardware, software, and firmware, and/or any combination thereof.

"A plurality of" in this application refers to two or more than two. The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. In this application, the terms "first", "second", "third", "fourth", and the like are intended to distinguish between different objects but do not indicate a particular order of the objects.

In this application, nouns "network" and "system" are usually interchangeably used, but a person skilled in the art can understand meanings of the nouns. In some cases, all "terminals"/"terminal devices" mentioned in this application may be mobile devices, for example, mobile phones, personal digital assistants, handheld or laptop computers, and similar devices having a telecommunications capability. In some cases, the "terminals"/"terminal devices" may alternatively be wearable devices or vehicle-mounted devices, and include terminals in a future 5G network, terminals in a future evolved PLMN network, or the like. Such a terminal may include a device and a removable storage module associated with the device (for example, including but not limited to, a subscriber identification module (Subscriber Identification Module, SIM for short) application, a universal subscriber identification module (Universal Subscriber Identification Module, USIM for short) application, or a universal integrated circuit card (Universal Integrated Circuit Card, UICC for short) of a removable user identity module (Removable User Identity Module, R-UIM for short) application). Alternatively, such a terminal may include a device that does not have the module. In another case, the term "terminal"/"terminal device" may be a non-portable device having a similar capability, for example, a desktop computer, a set top box, or a network device. The term "terminal"/"terminal device" may alternatively be any hardware or software component that can terminate a communication session of a user. In addition, "user terminal", "User Equipment", "UE", "site", "station", "STA", "user equipment", "user agent", "User Agent", "UA", "user equipment", "mobile device", and "device" are substitute terms that are synonymous with the "terminal"/"terminal device" in this specification. For ease of description, in this application, the foregoing devices are collectively referred to as user equipment or UE.

An "access node" mentioned in this application is a network device, is an apparatus deployed in radio access network to provide a wireless communication function for a terminal device, and has functions such as being responsible for scheduling and configuring a downlink reference signal for UE. The access node may include a macro base station, a micro base station, a relay node, an access point, and the like that are in various forms, may be a base transceiver station (base transceiver station, BTS for short) in global system for mobile communications (global system for mobile communications, GSM for short) or code division multiple access (code division multiple access, CDMA for short), or may be a NodeB (NodeB, NB for short) in wideband code division multiple access (wideband code division multiple access, WCDMA for short), or may be an evolved NodeB (evolved Node B, eNB or eNodeB for short) in long term evolution (long term evolution, LTE for short), or a relay station or an access point, a transmission node or transmission reception point (transmission reception point, TRP or TP for short) in an NR system, or a next generation node B (generation nodeB, gNB for short), a wireless-fidelity (wireless-fidelity, Wi-Fi for short) site, a wireless backhaul node, a small cell, or a micro base station, or a base station in a 5th generation mobile communications (a 5th generation mobile communications, 5G for short) network, or the like. This is not limited in this application. In systems using different radio access technologies, names of devices having functions of an access node may vary. For ease of description, in this application, the foregoing apparatuses providing a wireless communication function for UE are collectively referred to as the access node.

In this application, beam-based communication means that in a mobile communications system, transmission is performed by using a beam, and a higher antenna array gain can be implemented by sending a signal in a specific direction in space. The beam may be implemented by using a technology such as beamforming (beamforming). For example, an important research area in high frequency (high frequency, HF for short) communication is analog and digital hybrid beamforming (hybrid beamforming). In this way, loss of a high frequency signal caused by a transmission distance can be reduced, and complexity and hardware costs can be controlled within an acceptable level.

In the technologies in this application, related terms are defined as follows:
Quasi-co-location (quasi-co-location, QCL for short): A quasi-co-location relationship is used to indicate that a plurality of resources have one or more same or similar communication features. A same or similar communication configuration may be used for the plurality of resources having the quasi-co-location relationship. For example, if two antenna ports have a quasi-co-location relationship, a large-scale channel characteristic of transmitting one symbol by one port may be deduced from a large-scale channel characteristic of transmitting one symbol by the other port. The large-scale characteristic may include delay spread, an average delay, Doppler spread, Doppler frequency shift, an average gain, a receive parameter, a receive beam number of the terminal device, transmit/receive channel correlation, an angle of arrival, spatial correlation of a receiver antenna, a dominant angle of arrival (angle of arrival, AoA), an average angle of arrival, AoA spread, and the like. Specifically, the quasi-co-location indication is used to indicate whether the at least two groups of antenna ports have the quasi-co-location relationship: the quasi-co-location indication is used to indicate whether channel state information reference signals sent by the at least two groups of antenna ports are from a same transmission point; or the quasi-co-location indication is used to indicate whether channel state information reference signals sent by the at least two groups of antenna ports are from a same beam group.

Quasi-co-location assumption (QCL assumption): It is assumed whether a QCL relationship between two ports exists. The configuration and indication of the quasi-co-location assumption may be used to help a receiving side receive and demodulate a signal. For example, the receiving side can determine that a QCL relationship between a port A and a port B exists. In other words, a large-scale parameter of a signal measured on the port A may be used for signal measurement and demodulation on the port B.

Beam (beam): A beam is a communication resource. The beam may be a wide beam, a narrow beam, or a beam in another type. A technology for forming the beam may be a beamforming technology or another technology. The beamforming technology may be specifically a digital beamforming technology, an analog beamforming technology, or a digital/analog mixed beamforming technology. Different beams may be considered as different resources. Same information or different information may be sent by using different beams. Optionally, a plurality of beams having same or similar communication features may be considered as one beam. One beam may correspond one or more antenna ports, configured to transmit a data channel, a control channel, a sounding signal, and the like. For example, a transmit beam may be distribution of signal strength formed in different directions in space after a signal is transmitted by using an antenna, and a receive beam may be distribution of signal strength, in different directions in space, of a radio signal received from an antenna. It may be understood that, one or more antenna ports forming one beam may also be considered as one antenna port set. In a protocol, the beam can also be embodied as a spatial filter (spatial filter).

Beam information may be identified by using index information. Optionally, the index information may correspond to a resource identity configured for UE. For example, the index information may correspond to an ID or a resource configured for a channel state information reference signal (channel status information reference signal, CSI-RS for short), or may correspond to an ID or a resource configured for an uplink sounding reference signal (sounding reference signal, SRS for short). Alternatively, optionally, the index information may be a signal carried by using a beam or index information explicitly or implicitly carried on a channel. For example, the index information may be a synchronization signal sent with a beam or index information of the beam indicated by using a broadcast channel.

Alternatively, optionally, the beam information may be identified by using an absolute index of the beam, a relative index of the beam, a logical index of the beam, an index of an antenna port corresponding to the beam, an index of an antenna port group corresponding to the beam, and a time index of a downlink synchronization signal block; beam pair link (beam pair link, BPL) information, a transmit parameter (Tx parameter) corresponding to the beam, a receive parameter (Rx parameter) corresponding to the beam, a transmit weight (weight) corresponding to the beam, a weight matrix (weight matrix), a weight vector (weight vector), and a receive weight corresponding to the beam, or indexes of them; a sending codebook (codebook) corresponding to the beam, a receiving codebook corresponding to the beam, or indexes of them.

Spatial quasi-co-location (spatial QCL): The spatial QCL may be considered as a type of QCL. The spatial may be understood from two perspectives: from a transmitting side or from a receiving side. From the perspective of the transmitting side, if the two antenna ports are spatial quasi-co-location, it means that beam directions of the two antenna ports are the same in space. From the perspective of the receiving side, if the two antenna ports are spatial quasi-co-location, it means that the receiving side can receive, in a same beam direction, signals sent by the two antenna ports.

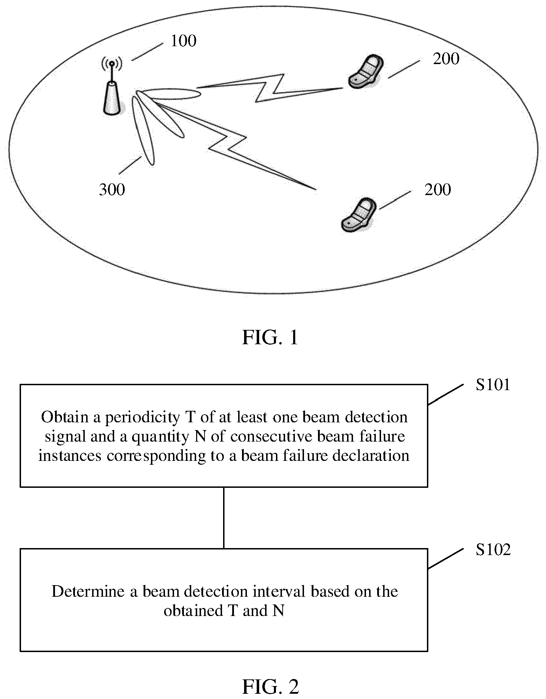

FIG. 1 shows an architecture of a network system in this application. This application is applicable to a multicarrier communications system based on a beam 300 that is shown in FIG. 1, for example, 5G new radio (new radio, NR for short). The system includes uplink (UE 200 to an access node 100) communication and downlink (the access node 100 to the UE 200) communication in the communications system. According to a long term evolution (long term evolution, LTE) /NR protocol, the uplink communication at a physical layer includes transmission of an uplink physical channel and transmission of an uplink signal. The uplink physical channel includes a random access channel (random access channel, PRACH for short), an uplink control channel (physical uplink control channel, PUCCH for short), an uplink data channel (physical uplink shared channel, PUSCH for short), and the like. The uplink signal includes a sounding reference signal SRS, an uplink control channel demodulation reference signal (PUCCH demodulation reference signal, PUCCH-DMRS for short), an uplink data channel demodulation reference signal PUSCH-DMRS, an uplink phase noise tracking reference signal (phase noise tracking reference signal, PTRS for short), and the like. The downlink communication includes transmission of a downlink physical channel and transmission of a downlink signal. The downlink physical channel includes a physical broadcast channel (physical broadcast channel, PBCH for short), a downlink control channel (physical downlink control channel, PDCCH for short), a downlink data channel (physical downlink shared channel, PDSCH for short), and the like. The downlink signal includes a primary synchronization signal (primary synchronization signal, PSS for short)/secondary synchronization signal (secondary synchronization signal, SSS for short), a downlink control channel demodulation reference signal PDCCH-DMRS, a downlink data channel demodulation reference signal PDSCH-DMRS, and a phase noise tracking signal PTRS, a channel state information reference signal (channel status information reference signal, CSI-RS), a cell reference signal (cell reference signal, CRS for short) (which does not exist in NR), a fine synchronization signal (Time/frequency tracking Reference Signal, TRS for short) (which does not exist in LTE), and the like.

In NR, a beam indication of a beam used for a downlink channel or a beam indication of a beam corresponding to sending of a reference signal is implemented by associating with a reference resource index in a transmission configuration indicator (transmission configuration indicator, TCI for short) status table.

Specifically, a base station configures a TCI state table (corresponding to TCI-states in 38.331) by using RRC (Radio Resource Control, radio resource control) higher layer signaling, and each TCI state table includes several TCI states (corresponding to TCI-RS-Set in 38.331). Each TCI state includes a TCI state ID (TCI-RS-SetID), one or two QCL type indications (QCL-type A/B/C/D), and a reference RS-ID corresponding to each type indication. The QCL types are as follows:
QCL-Type A: {Doppler frequency shift, Doppler spread, average delay, and delay spread}
QCL-Type B: {Doppler frequency shift and Doppler spread}
QCL-Type C: {Average delay and Doppler shift}
QCL-Type D: {Spatial reception parameter}

QCL-type D represents a spatial quasi-co-location relationship. When a receive beam needs to be indicated, the base station indicates a TCI state including spatial quasi-co-location information by using higher layer signaling or control information. The UE reads a reference RS-ID corresponding to the QCL-type D based on the TCI state. The UE may then perform receiving based on a currently maintained spatial reception configuration (the receive beam) corresponding to the RS-ID. According to 38.214, if a TCI state includes a spatial quasi-co-location indication (QCL-type D), a reference RS corresponding to the spatial quasi-co-location indication may be an SS/PBCH block or a periodic or semi-persistent CSI-RS. Beam indications (TCI indications) of different downlink channels are completed through different signalings.

A beam indication of the PDCCH is associated with one or more TCI states by using RRC configured higher layer signaling tci-StatesPDCCH, and when a quantity of associated TCI states is greater than 1, one of the TCI states is selected by using MAC-CE higher layer signaling.

A beam indication of the PDSCH is indicated by a state associated with a TCI field in DCI transmitted on the PDCCH. In an NR standard, a length of a TCI field included in DCI is 3 bits (corresponding to eight TCI states). When a quantity M of TCI states included in RRC signaling is less than 8, an activated TCI state is directly mapped to the TCI field. Otherwise, a maximum of eight TCI states that are to be mapped are indicated by using higher layer signaling. When the higher layer signaling indicates that the TCI field does not appear in the DCI, the UE reuses a beam indication of a control channel to receive a data channel.

For the uplink transmission, a spatial quasi-co-location relationship is not defined in NR, and an uplink beam indication is directly implemented by using a reference signal resource identifier.

A beam indication of the PUCCH is indicated by using an RRC parameter PUCCH-Spatial-relation-info. The parameter may include one or more reference signal resource identifiers. When the parameter includes a plurality of reference signal resource identifiers, one of the plurality of reference signal resource identifiers is selected by using MAC-CE higher layer signaling. Content of the beam indication of the PUCCH may be an uplink or a downlink reference signal resource identifier which includes an SSB index, a CRI, or an SRS index, and indicates that it is recommended that the UE perform uplink transmission by using a corresponding beam used to receive/send the downlink/uplink reference signal resource.

Beam information of the PUSCH is configured using an SRS index in DCI.

In the uplink and downlink communication, all channels may have corresponding transmit and receive beams. A beam failure in a downlink physical channel (for example, a downlink control channel) is used as an example of a beam failure in this application. Specifically, after quality of communication between a transmit beam and a receive beam of the downlink physical channel deteriorates, a beam failure may occur. In an NR protocol, in a beam detection interval (which may correspond to a reporting periodicity), when beam quality of all downlink physical channels that need to be detected is lower than a threshold, it may be considered as one beam failure instance. It should be noted that the UE implements beam detection by using a beam detection signal. For at least one beam detection signal, the UE has learned a periodicity of each beam detection signal before detection. Therefore, the UE knows which beam detection signals need to be detected in a current beam detection interval, and the UE detects the beam detection signals that need to be detected. When a quantity of consecutive beam failure instances reaches a maximum quantity of times (the maximum quantity of times may be configured by the access node 100, or may be a specific value specified in a protocol), it may be determined that a beam failure occurs.

In this application, in the system shown in FIG. 1, the access node 100 may configure a set *q̅*₀ for the UE 200, for beam failure detection, by using the higher layer signaling, for example, radio resource control (Radio Resource Control, RRC for short) signaling. It should be noted that the set may not be configured by the access node 100, but may be determined by the UE 200 according to a TCI indication of a downlink physical channel, such as a downlink control channel. The set optionally includes one or more periodic CSI-RS resource indexes. Optionally, the access node 100 may further configure, by using higher layer signaling (for example, RRC), a set *q̅*₁ for the UE 200 as a candidate beam set (the set may alternatively be determined by the UE 200). The set optionally includes a CSI-RS resource index and/or an SSB resource index. Optionally, the access node 100 configures a maximum quantity N of beam failure instances (the quantity N may not be configured by the access node 100, but may be a specific value specified in a protocol) for the UE 200 by using higher layer signaling (for example, RRC). The access node 100 configures a threshold Qin for a candidate beam after a beam failure. T access node 100 configures, for the UE 200, random access channel (random access channel, RACH for short) information for beam recovery, an RACH resource corresponding to the candidate beam, a control resource set (control resource set) used to detect a beam failure recovery acknowledgment, and the like. In addition, the higher layer signaling further includes some other configuration information, including a beam recovery timer, a beam recovery acknowledgment timer, and a maximum quantity of transmissions of a beam recovery request. When the access node 100 does not configure the set *q̅*₀, the UE 200 should determine *q̅*₀ based on a TCI state corresponding to a downlink physical channel (such as a PDCCH) that is currently required to be detected, to include an SSB and/or a periodic CSI-RS that has a spatial QCL relationship with the channel (such as the PDCCH). The threshold Qin is a physical layer reference signal received power (layer 1- reference signal received power, L1-RSRP for short) threshold of the CSI-RS, and a threshold of the SSB may be deduced by using powerControlOffsetSS (that is, PC_ss, indicating a power offset between a CSI-RS resource element and a resource element of the SSB) in higher layer signaling and Qin.

The downlink control channel PDCCH is used as an example. The UE 200 uses an RS that meets a spatial quasi-co-location relationship with a DMRS of the PDCCH in *q̅*₀ to evaluate quality of the control channel. Specifically, the UE 200 estimates a block error rate (Block Error Rate, BLER for short) of the PDCCH (PDCCH-hypothetical-BLER) by using an RS that meets the condition. In a beam detection interval (which may correspond to a reporting periodicity), when hypothetical-BLERs of all downlink control channels that need to be detected are greater than a threshold (for example, which may be 0.1), the physical layer of the UE 200 acknowledges one beam failure instance and reports the beam failure instance to a MAC layer of the UE 200 side in a specified periodicity.

The MAC layer of the UE 200 side counts the beam failure instance reported by the physical layer. When a quantity of consecutive beam failure instances reaches a maximum value N configured by the access node 100, the MAC may determine that a beam failure occurs, start a beam failure recovery timer, and notify the physical layer of the UE 200 that the beam failure occurs. Optionally, after receiving a beam failure indication of the MAC layer, the physical layer of the UE 200 reports a beam measurement result of a reference signal that meets the threshold Qin for the candidate beam in the set *q̅*₁, where a reporting form is one or more groups of {beam RS index, L1-RSRP measurement result}. The MAC layer of the UE 200 selects an RS index of a candidate beam according to a rule based on the measurement result and the beam that are reported by the physical layer, searches for a corresponding RACH resource based on the RS index, and feeds back the selected beam index q_{new} and the RACH resource corresponding to the beam index q_{new} to the physical layer. The physical layer of the UE 200 sends a beam failure recovery request (beam-failure-recovery-request) on a specified RACH resource by using the beam corresponding to q_{new} and based on RACH information configured by using higher layer signaling. After a predetermined quantity of timeslots after sending the beam failure recovery request, the UE 200 monitors, by using the beam corresponding to q_{new}, a control resource set CORESET that is allocated by using higher layer signaling and that is used for a beam failure recovery acknowledgment, where acknowledgment content is possible downlink control information (DCI) scrambled by using a C-RNTI scrambling code. If the acknowledgment is successfully obtained, the beam recovery succeeds, and a normal beam management procedure is started. If a valid acknowledgment is not successfully received within a time window, the foregoing process is repeated again starting from sending the beam recovery request until a maximum quantity of beam recovery requests is reached or the beam failure recovery timer expires.

In the foregoing, a beam failure detection and recovery procedure in the system is implemented. It should be noted that, FIG. 1 shows merely an example of the architecture of the network system in this application, and this application is not limited thereto.

### Embodiment 1

This embodiment may be applied to a scenario in which UE interacts with an access node, or may be internally implemented in the UE. According to the embodiments of this application, FIG. 2 is a flowchart of a first embodiment of a beam failure detection method according to this application.

The method is applied to a UE side, and includes the following steps:
S101: Obtain a periodicity T of at least one beam detection signal and a quantity N of consecutive beam failure instances corresponding to beam failure declaration.

The beam detection signal is sent by using a beam. In this application, descriptions are provided by using an example of a transmission direction from the access node to the UE. The beam detection signal may be sent in a manner in which a beam is in a one-to-one correspondence with a beam detection signal (or a beam detection signal resource). Alternatively, one beam detection signal may be sent by using a plurality of beams, or a plurality of beam detection signals may be sent by using one beam. The beam detection signal includes but is not limited to a reference signal RS (for example, a CSI-RS) or a synchronization signal block (synchronization signal block, SSB for short), or may be another signal used to evaluate beam quality. A specific type of a reference signal is not limited in this application. A transmit beam (the beam may be a used beam in Embodiment 5) can be detected by detecting the beam detection signal sent by using the beam.

The beam in this application may be specifically embodied as, for example, but is not limited to, a spatial domain transmission filter (spatial domain transmission filter, or spatial transmission filter). The beam may be specifically represented by, for example, but is not limited to, a reference signal resource corresponding to the beam. For example, in a next-generation wireless communications system, that is, a new radio (New Radio, NR) system, the beam may be represented by a channel state information reference signal (Channel State Information Reference Signal, CSI-RS) resource, and beam quality may be determined based on the CSI-RS resource (CSI-RS Resource) corresponding to the beam. The CSI-RS resource corresponding to the beam may be indicated by using a CRI (CSI-RS Resource Indicator, CSI-RS resource indicator), and the beam quality may be specifically reflected as reference signal received power (Reference Signal Received Power, RSRP). For another example, in the NR system, the beam may alternatively be represented by an SSB resource, and beam quality is determined based on the SSB resource corresponding to the beam. Therefore, both the reference signal and the SSB herein are beam detection signals, and the beam detection signal may alternatively be another signal.

Optionally, the at least one beam detection signal is a beam detection signal in a beam detection signal set *q̅*₀, and the set may be configured by the access node for the UE by using higher layer signaling (RRC) for beam failure detection. A beam detection signal that needs to be measured during beam failure detection in *q̅*₀ is: a beam detection signal that meets a spatial quasi-co-location relationship with a DMRS of a PDCCH in *q̅*₀ in a possible case; or all beam detection signals in *q̅*₀ in another possible case. This application is not limited to the two examples.

Optionally, the set *q̅*₀ may not be configured by the access node 100, but may be determined by the UE 200 based on a TCI indication of a physical downlink channel such as a downlink control channel PDCCH, to include an SSB and/or a periodic CSI-RS that has a spatial QCL relationship with the PDCCH, to form the set. The set optionally includes one or more periodic CSI-RS resource indexes, or may include an SSB resource index. Optionally, the access node 100 may further configure, by using higher layer signaling (RRC), a set *q̅*₁ for the UE 200 as a candidate beam set (the set may alternatively be determined by the UE 200). The set optionally includes a CSI-RS resource index and/or an SSB resource index. With respect to "having a QCL relationship with the PDCCH" herein, using a reference signal RS as an example, if the RS has a QCL relationship with the PDCCH, it means that the RS and the PDCCH have a same TCI state, or the RS is used as a reference signal RS of a beam indication of the PDCCH, or a TCI state of a beam indication corresponding to the RS and a TCI state of a beam indication of the PDCCH have a same reference signal RS.

The beam failure instance is that a detection result of each beam detection signal in the at least one beam detection signal does not meet a predetermined condition in at least one beam detection interval. It should be noted that the UE implements beam detection by using a beam detection signal. For at least one beam detection signal, the UE has learned a periodicity of each beam detection signal before detection. Therefore, the UE knows which beam detection signals need to be detected in a current beam detection interval, and the UE detects the beam detection signals that need to be detected. Two beam detection signals having different periodicities, a signal 1 (a short periodicity) and a signal 2 (a long periodicity), are used as an example for description. If the signal 1 needs to be detected but the signal 2 does not need to be detected in a detection interval, and a detection result of the signal 1 does not meet the predetermined condition, it is determined that a beam failure instance exists in the detection interval. If the signal 1 and the signal 2 need to be detected in a detection interval, and detection results of the signal 1 and the signal 2 do not meet the predetermined condition, it is determined that a beam failure instance exists in the detection interval. If the signal 1 and the signal 2 need to be detected in a detection interval, and a detection result of the signal 1 and/or a detection result of the signal 2 meet/meets the predetermined condition, it is determined that a beam failure instance does not exist in the detection interval. In an example in which a downlink control channel PDCCH is detected by using an RS, the UE 200 uses an RS that meets a spatial quasi-co-location relationship with a DMRS of the PDCCH in *q̅*₀ to evaluate quality of the control channel. Optionally, the UE 200 estimates a BLER of the PDCCH (PDCCH-hypothetical-BLER) by using an RS that meets the condition. When hypothetical-BLERs of all downlink control channels that need to be detected are greater than a threshold (for example, which may be 0.1) in a beam detection interval (which may correspond to one reporting periodicity, and the reporting periodicity may have a time offset), it is determined that a beam failure instance exists. The condition for detecting whether a beam failure instance exists is not limited in this application.

If the UE detects that the quantity of consecutive beam failure instances reaches the quantity N corresponding to the beam failure declaration, the UE determines that beam detection consecutively fails, and performs the beam failure declaration. In a specific implementation process, the performing beam failure declaration may be embodied as: starting a beam failure recovery timer; selecting an available alternative beam set based on an alternative beam threshold, and reporting a corresponding L1-RSRP measurement result; determining q_{new} of an alternative beam and an RACH resource corresponding to q_{new} based on an algorithm; and sending a beam recovery request. A specific operation of performing beam failure declaration is not limited in this embodiment of the present invention. For specific content of the beam recovery request, refer to the prior art. For example, the beam recovery request may be sending access information on a random access resource (which may be a random access resource allocated by the node 100 or a predefined random access resource) by using a beam corresponding to q_{new} and based on an access sequence allocated by the node 100. Alternatively, the beam failure recovery request may be sent on a PUCCH resource allocated by the node 100. Optionally, when determining that a beam failure instance exists in a beam detection interval, a physical layer of the UE reports the beam failure instance to a higher layer (for example, a MAC layer) of the UE in a reporting periodicity, and the higher layer of the UE counts the beam failure instance. If a beam failure instance still exists in a next beam detection interval (it may be determined through detection that a beam failure instance exists in a next beam detection interval; or a state of the previous beam detection interval in which a beam failure instance exists is still used without detection in the next beam detection interval), the physical layer of the UE reports the beam failure instance to the higher layer, and the higher layer adds 1 to a count of beam failure instances. If there are consecutive beam failure instances, when the count reaches the quantity N corresponding to the beam failure declaration, the higher layer performs the beam failure declaration. If beam failure instance does not exist in the next beam detection interval, the physical layer of the UE may not report a beam failure instance to the higher layer or may report to the higher layer that a beam failure instance does not exist, and the higher layer sets the count of the beam failure instances to zero, and sets the count to 1 only when a beam failure instance exists next time. Optionally, reporting the beam failure instance by the physical layer of the UE to the higher layer of the UE may not be necessary, and whether a reporting action exists is not limited. Instead, only the quantity of beam failure instances is counted, and when the condition is met, beam failure declaration is performed. For example, whether the reporting exists may not be limited, and the beam failure declaration is performed as long as the quantity of consecutive beam failure instances reaches N. Optionally, an additional condition may alternatively be set. For example, when the quantity of consecutive beam failure instances reaches N, a predetermined condition further needs to be met to determine whether to perform beam failure declaration predetermined condition. The predetermined condition may be that a quantity of times that a detection result of a beam detection signal that needs to be detected consecutively does not meet a predetermined condition reaches a preset value. For example, if there are a plurality of beam detection signals that need to be detected, the predetermined condition may be that a quantity of times that a detection result of a beam detection signal having a shortest periodicity consecutively does not meet the predetermined condition reaches at least N (corresponding to N beam detection intervals), and a quantity of times that a detection result of a beam detection signal having a longest periodicity consecutively does not meet a predetermined condition reaches at least one (the one time needs to fall within a range of a total length of N beam detection intervals).

It should be noted that the beam detection interval is a time interval used for beam detection, but does not define an interval in which a beam detection action inevitably occurs. Similarly, in a solution including the reporting, a reporting periodicity does not mean that an action of reporting a beam failure instance inevitably occurs and a reporting action needs to be performed in the periodicity. Instead, the reporting periodicity means that when it is determined that a beam failure instance exists, the reporting needs to be performed in the reporting periodicity. In addition, optionally, a length of one beam detection interval may correspond to a length of one beam reporting periodicity (reporting time interval). Optionally, the reporting periodicity may further include a predetermined time offset. If the UE can perform beam detection, detection needs to be performed in the detection interval used for detection. Alternatively, after performing detection in a previous detection interval, the UE may not perform beam detection in a detection interval next to the previous detection interval. In this case, a state of the next detection interval is the same as a state of the previous detection interval. For example, if a detection result of a first detection interval is a state in which a beam failure instance exists, when no detection action is performed in a second detection interval, a state of the second detection interval is also considered as the state in which a beam failure instance exists. If the physical layer of the UE needs to indicate a beam failure instance to a higher layer such as a MAC layer, the physical layer of the UE reports the beam failure instance to the higher layer of the UE in the reporting (indication) periodicity. In the foregoing example, the UE may report the beam failure instance detected in the first/second detection interval on time in the reporting periodicity, or may report the beam failure instance at a delay of a specific time offset. Regardless of whether there is the offset, a time interval between two consecutive times of reporting needs to be greater than or equal to the length of the beam detection interval. When the quantity of beam failure instances reported by the UE reaches a predetermined quantity, the higher layer determines to perform beam failure declaration.

Optionally, there are at least two manners for obtaining the periodicity T and the quantity N. In one manner, both or one of the periodicity T and the quantity N may be obtained by the access node through signaling exchange between the UE and the access node. For example, the periodicity T may be obtained by the access node, and the quantity N is a fixed value specified in a standard. Optionally, the access node may obtain the periodicity T and the quantity N that are configured by the access node. In a second manner, the periodicity T and the quantity N are obtained by a corresponding processing unit of the UE from a storage unit of the UE. This application is not limited to the two manners, and the periodicity T and the quantity N may alternatively be obtained by a third party. It should be noted that parameters are not limited to the periodicity T and the quantity N. Optionally, the UE further obtains a parameter other than the periodicity T and the quantity N, for example, an adjustment amount k used to adjust the length of the beam detection interval or perform length scaling. The parameters may be used to determine the length of the beam detection interval. An obtaining manner of these parameters is similar to that of the periodicity T and the quantity N. For the obtaining manner, refer to the foregoing description, and details are not described herein again.

The detection interval and the detection periodicity mentioned above may be in units of absolute time (for example, milliseconds), or may be relative time concepts such as a slot and an OFDM symbol length.

S102: Determine the length of the beam detection interval based on the obtained T and N.

Optionally, a downlink control channel PDCCH is used as an example. For the UE, if access node signaling does not explicitly configure the set *q̅*₀, but the UE determines *q̅*₀ according to a TCI indication of the downlink control channel, the length of the beam detection interval should be determined based on a periodicity of a detection signal that needs to be measured in *q̅*₀ determined by the UE.

Optionally, the periodicity T of the at least one beam detection signal includes: a periodicity Tₛₕₒᵣₜ of a beam detection signal with a shortest periodicity in the at least one beam detection signal and/or a periodicity T_{long} of a beam detection signal with a longest periodicity in the at least one beam detection signal. In this case, the determining the length of the beam detection interval based on the obtained T and N includes: determining the length of the beam detection interval based on Tₛₕₒᵣₜ and/or T_{long} and N.

Optionally, the downlink control channel PDCCH and the beam detection signal being an RS are used as an example. It is assumed that a PDCCH that the UE is required to detect has a plurality of control resource sets CORESETs, a beam indication of each CORESET corresponds to one validated TCI state, and beam indications of different CORESETs may correspond to a same TCI state or different TCI states. If these TCI states are the same, beam indications of the plurality of CORESETs correspond to one TCI state. If these TCI states are different, beam indications of the plurality of CORESETs correspond to a plurality of TCI states. It is assumed that beam indications of all CORESETs that need to be detected by the UE are associated with a total of M different TCI states. For each TCI state, if there is a QCL relationship between one or more reference signals in reference signals that need to be measured in *q̅*₀ and a CORESET associated with the TCI state, a shortest periodicity is selected from periodicities corresponding to the reference signals, and the shortest periodicity is put into a set Q. It is clear that, a quantity of elements in the set Q should be equal to a quantity (that is, M) of different TCI states associated with all CORESETs of the PDCCH. In this case, a longest periodicity in the set Q is set to T_{long}, and a minimum periodicity is set to Tₛₕₒᵣₜ. In this case, Tₛₕₒᵣₜ and/or T_{long} are/is used as a parameter/parameters for calculating the length of the beam detection interval. The following uses an example for description. It is assumed that there are two CORESETs (a CORESET#1 and a CORESET#2). There is a QCL relationship between a DMRS port of the CORESET#1 and ports of an RS#1 and an RS#2. A periodicity of the RS#1 is T1=10 ms, and a periodicity of the RS#2 is T2=20 ms. There is a QCL relationship between a DMRS port of the CORESET #2 and ports of an RS #3 and an RS #4, a periodicity of the RS #3 is T3=5 ms, and a periodicity of the RS #4 is T4=10 ms. In this case, the periodicity 10 ms of the RS #1 corresponding to the CORESET #1 and the periodicity 5 ms of the RS #3 corresponding to the CORESET #2 should be put into the set Q, that is, the set Q is [10, 5]. In this case, the periodicity T of the beam detection signal obtained by the UE includes Tₛₕₒᵣₜ=5 and T_{long}=10. Then, the length of the beam detection interval is determined based on Tₛₕₒᵣₜ and T_{long}.

Optionally, the determined length of the beam detection interval may be one of the following, but is not limited to the following examples: ┌T_{long}/N┐, T_{long}/N, Tₛₕₒᵣₜ x ┌(T_{long}/N/Tₛₕₒᵣₜ)┐, max{Tₛₕₒᵣₜ x ┌(T_{long}/N/Tₛₕₒᵣₜ)┐, T'}, max{Tshort, ┌T_{long}/N┐}, max{Tₛₕₒᵣₜ, T_{long}/N}, max{Tₛₕₒᵣₜ, {max{Tₛₕₒᵣₜ, ┌T_{long}/N┐}, T'}, max{max{Tₛₕₒᵣₜ, T_{long}/N}, T'}, min{T_{long}, Tₛₕₒᵣₜ x N}, and max{Tₛₕₒᵣₜ, ┌T_{long}/N/T'┐ x T'}, where T' is a predetermined duration value, a symbol max{ } indicates taking a maximum value, min{ } indicates taking a minimum value, and a symbol ┌ ┐ indicates rounding up. T' may be a duration value specified in a standard, or may be configured by the access node for the UE. Alternatively, T' may be a value determined based on different subcarrier spacings (subcarrier spacing, SCS for short), for example, a value that changes with a subcarrier spacing. A relationship between T' and the SCS may be a proportional relationship. For example, for a subcarrier spacing of 120 kHz, T'=10 ms, and for a subcarrier spacing of 60 kHz, T'=10 x (120/60) ms=20 ms. Alternatively, T' may be in a unit of a slot. An association between T' and the subcarrier spacing may alternatively be that T' explicitly corresponds to the subcarrier spacing in a traversal manner, for example, by using a table describing a relationship between T' and the subcarrier spacing.

Specifically, "max{Tₛₕₒᵣₜ, [T_{long}/N┐}" is used as an example. It is assumed that there are four beam detection signals, periodicities of which are respectively two slots (a signal 1), four slots (a signal 2), eight slots (a signal 3), and 16 slots (a signal 4), and N is 3. In this case, the length of the beam detection interval determined based on "max{Tₛₕₒᵣₜ, ┌T_{long}/N┐}" is max{2, ┌16/3┐}, that is, six slots. Other manners are similar, and details are not described herein again.

If the UE further obtains a parameter other than T and N, for example, the adjustment amount k, the determining the length of the beam detection interval based on the obtained T and N includes: determining the length of the beam detection interval based on T, N, and k. Optionally, the periodicity T of the at least one beam detection signal includes: a periodicity Tₛₕₒᵣₜ of a beam detection signal with a shortest periodicity in the at least one beam detection signal and/or a periodicity T_{long} of a beam detection signal with a longest periodicity in the at least one beam detection signal.

Optionally, the determined length of the beam detection interval includes one of the following, but is not limited to the following examples:
┌k x T_{long}/N┐, k x T_{long}/N, Tₛₕₒᵣₜ x ┌(k x T_{long}/N/Tₛₕₒᵣₜ)┐, max{Tₛₕₒᵣₜ x ┌(k x T_{long}/N/Tₛₕₒᵣₜ)┐, T'}, max{Tₛₕₒᵣₜ, ┌k x T_{long}/N┐}, max{Tₛₕₒᵣₜ, k x T_{long}/N}, max{max{Tₛₕₒᵣₜ, ┌k x T_{long}/N┐}, T'}, max {max{Tₛₕₒᵣₜ, k x T_{long}/N}, T'}, min{T_{long}, Tₛₕₒᵣₜ x N x k}, and max {Tₛₕₒᵣₜ, ┌k x T_{long}/N/T'┐ x T'}, where T' is a predetermined duration value, a symbol max{ } indicates taking a maximum value, min{ } indicates taking a minimum value, and a symbol ┌ ┐ indicates rounding up. T' may be a duration value specified in a standard, may be configured by the access node for the UE, or may be a value determined based on different subcarrier spacings SCSs. For a specific description of a manner of obtaining the length of the beam detection interval when k is introduced, refer to the foregoing example. Details are not described herein again.

Optionally, if a shortest periodicity and a longest periodicity corresponding to detection signals that need to be measured in the set *q̅*₀ are Tₛₕₒᵣₜ and T_{long}, the UE may assume that Tₛₕₒᵣₜ x N being greater than or equal to T_{long} x k is always true. Alternatively, the UE may assume that periodicities of reference signals that need to be measured in *q̅*₀ are the same.

According to the beam failure detection method in this embodiment of this application, a proper length of the beam detection interval can be determined by obtaining valid parameters, to implement effective beam failure detection.

### Embodiment 2

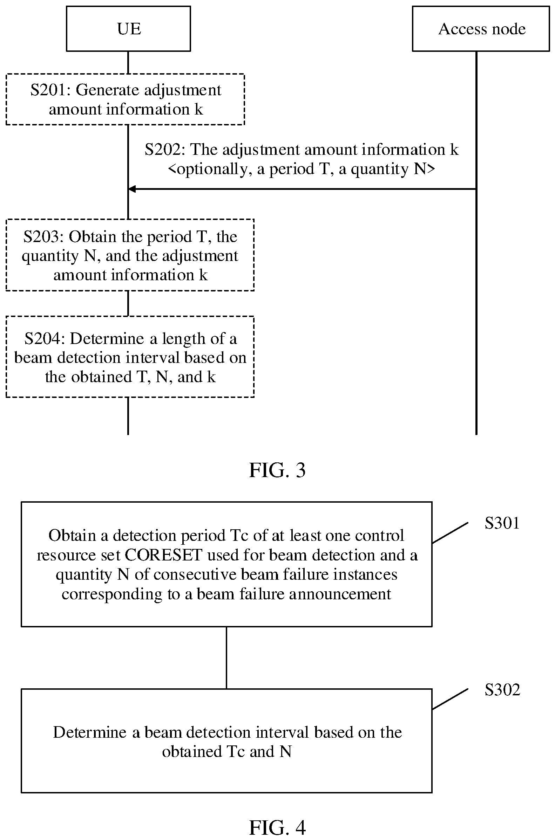

FIG. 3 is a flowchart of a second embodiment of a method for beam failure detection according to this application. A difference from Embodiment 1 lies in that this embodiment is specifically directed to a solution using an adjustment amount k, and to a scenario in which UE obtains, by interacting with an access node, a parameter used to determine a length of a beam detection interval. Content that is the same as or similar to that in Embodiment 1 is not described again in this embodiment. It should be noted that, for ease of understanding of the solution, in this embodiment, actions on both sides of the UE and the access node are described, and an overall description is provided from perspectives of multiple parties of interaction. However, an improvement in a system is not limited to that steps on all sides of interaction must be performed together. In the technical solution provided in this application, improvements are made on each side of the system.

The method includes:
S201: An access node generates adjustment amount information k, where the adjustment amount information is used by UE to adjust a length of a beam detection interval.

To implement beam failure detection on the UE side, the access node configures, for the UE, related configuration information used for beam failure detection, for example, information about a related beam detection signal. Optionally, information about the set *q̅*₀ and the periodicity T and the like in some cases in Embodiment 1 may alternatively be a quantity N of consecutive beam failure instances corresponding to a beam failure declaration. In this embodiment, to control scaling of the length of the beam detection interval of the UE, the access node generates the adjustment amount information k and configures the information for the UE.

S202: The access node sends the adjustment amount information k to the UE.

This embodiment is not limited to sending only the adjustment amount information. Other configuration information (if present), for example, the periodicity T or the quantity N described above, can also be sent to the UE.

S203: The UE obtains a periodicity T of at least one beam detection signal, a quantity N of consecutive beam failure instances corresponding to a beam failure declaration and the adjustment amount information k.

For related explanations and descriptions of optional solutions, refer to corresponding content of S 101 in Embodiment 1. Details are not described herein again.

S204: The UE determines a length of a beam detection interval based on the obtained T, N, and k.

For related explanations and descriptions of optional solutions, refer to corresponding content of S 102 in Embodiment 1. Details are not described herein again.

According to the beam failure detection method in this embodiment of this application, a proper length of the beam detection interval can be determined by configuring, by the access node, the adjustment amount information used to adjust the length of the beam detection interval, to implement effective beam failure detection.

### Embodiment 3

FIG. 4 is a flowchart of a first embodiment of another method for beam failure detection according to this application. A difference from Embodiment 1 and/or Embodiment 2 lies in that in this embodiment, the length of the beam detection interval is determined based on the detection periodicity Tc of the control resource set, rather than the beam detection signal periodicity T, that is, Tc is used to replace T. Content that is the same as or similar to that in Embodiment 1 and/or Embodiment 2 is not described again in this embodiment.

The method is applied to a UE side, and includes:
S301: Obtain a detection periodicity Tc of at least one control resource set CORESET used for beam detection and a quantity N of consecutive beam failure instances corresponding to a beam failure declaration.

In this embodiment, beam failure detection is performed by performing beam detection on a downlink control signal PDCCH. The PDCCH corresponds to a control resource set CORESET, each PDCCH has a periodicity that corresponds to a detection periodicity of the CORESET, and each CORESET has a time offset. Through configuration of the access node, the UE can obtain the detection periodicity of the CORESET.

It should be noted that, in this step of this embodiment, the obtaining is not limited to an obtaining manner in which the UE interacts with the access node through air interface signaling, and further includes a manner in which the UE obtains data from stored data. For details, refer to related descriptions in Embodiment 1.

S302: Determine a length of a beam detection interval based on the obtained Tc and N.

Optionally, Tc may include a shortest detection periodicity Tₛₕₒᵣₜ in the detection periods of the at least one CORESET and/or a longest detection periodicity T_{long} in the detection periods of the at least one CORESET. The determining a length of the beam detection interval based on the obtained Tc and N includes: determining the length of the beam detection interval based on Tₛₕₒᵣₜ and/or T_{long} and N.

Optionally, the determined length of the beam detection interval may be one of the following, but is not limited to the following examples: ┌T_{long}/N┐, T_{long}/N, Tₛₕₒᵣₜ x ┌(T_{long}/N/Tₛₕₒᵣₜ)┐, max{Tₛₕₒᵣₜ x ┌(T_{long}/N/Tₛₕₒᵣₜ)┐, T'}, max{Tₛₕₒᵣₜ, ┌T_{long}/N┐}, max{Tₛₕₒᵣₜ, T_{long}/N}, max{Tₛₕₒᵣₜ, {max{ Tₛₕₒᵣₜ, ┌T_{long}/N┐}, T'}, max{Tₛₕₒᵣₜ, {max{ Tₛₕₒᵣₜ, T_{long}/N}, T'}, min{T_{long}, Tₛₕₒᵣₜ x N}, and max{Tₛₕₒᵣₜ, ┌T_{long}/N/T'┐ x T'}, where T' is a predetermined duration value, a symbol max{ } indicates taking a maximum value, min{ } indicates taking a minimum value, and a symbol ┌ ┐ indicates rounding up. T' may be a duration value specified in a standard, or may be configured by the access node for the UE. Alternatively, T' may be a value determined based on different subcarrier spacings (subcarrier spacing, SCS for short), for example, a value that changes with a subcarrier spacing. A relationship between T' and the SCS may be a proportional relationship. For example, for a subcarrier spacing of 120 kHz, T'=10 ms, and for a subcarrier spacing of 60 kHz, T'=10 x (120/60) ms=20 ms. Alternatively, T' may be in a unit of a slot. An association between T' and the subcarrier spacing may alternatively be that T' explicitly corresponds to the subcarrier spacing in a traversal manner, for example, by using a table describing a relationship between T' and the subcarrier spacing.

Specifically, "max{Tₛₕₒᵣₜ, ┌T_{long}/N┐}" is used as an example. It is assumed that the UE needs to detect three control resource sets, periods of which are respectively four slots (CORESET#1), eight slots (CORESET#2), and 16 slots (CORESET#3), and N is 3, the length of the beam detection interval determined based on "max{Tₛₕₒᵣₜ, ┌T_{long}/N┐}" is max{2, ┌16/3┐}, that is, six slots. Other manners are similar, and details are not described herein again.

If the UE further obtains another parameter other than Tc and N, for example, the adjustment amount k, the determining a length of the beam detection interval based on the obtained Tc and N includes: determining the length of the beam detection interval based on Tc, N, and k. Optionally, Tc may include a shortest detection periodicity Tₛₕₒᵣₜ in the detection periods of the at least one CORESET and/or a longest detection periodicity T_{long} in the detection periods of the at least one CORESET.

Optionally, the determined length of the beam detection interval includes one of the following, but is not limited to the following examples: ┌k x T_{long}/N┐, k x T_{long}/N, Tₛₕₒᵣₜ x ┌(k x T_{long}/N/Tₛₕₒᵣₜ)┐, max{Tₛₕₒᵣₜ x ┌(k x T_{long}/N/Tₛₕₒᵣₜ)┐, T'}, max{Tₛₕₒᵣₜ, ┌k x T_{long}/N┐}, max{Tₛₕₒᵣₜ, k x T_{long}/N}, max {max{Tₛₕₒᵣₜ ┌k x T_{long}/N┐}, T'}, max {max{Tₛₕₒᵣₜ, k x T_{long}/N}, T'}, min{T_{long}, Tₛₕₒᵣₜ x N x k}, max{Tₛₕₒᵣₜ, ┌k x T_{long}/N/T'┐ x T'}, where T' is a predetermined duration value, a symbol max{ } indicates taking a maximum value, min{ } indicates taking a minimum value, and a symbol ┌ ┐ indicates rounding up. T' may be a duration value specified in a standard, may be configured by the access node for the UE, or may be a value determined based on different subcarrier spacings SCSs. For a specific description of a manner of obtaining the length of the beam detection interval when k is introduced, refer to the foregoing example. Details are not described herein again.

According to the beam failure detection method in this embodiment of this application, a proper length of the beam detection interval can be determined by considering a CORESET detection period, to implement effective beam failure detection.

### Embodiment 4

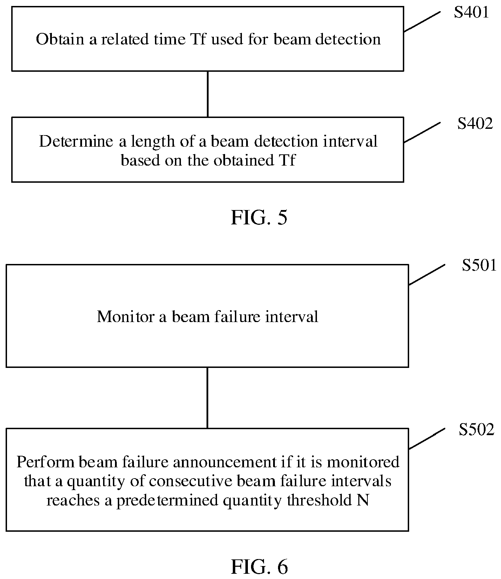

FIG. 5 is a flowchart of a first embodiment of another method for beam failure detection according to this application. A difference from Embodiment 1, Embodiment 2, and/or Embodiment 3 lies in that in this embodiment, the length of the beam detection interval is not determined based on the quantity N of consecutive beam failure instances corresponding to the beam failure declaration. Content that is the same as or similar to that in Embodiment 1, Embodiment 2, and/or Embodiment 3 is not described again in this embodiment.

The method is applied to a UE side, and includes:
S401: Obtain a related time Tf used for beam detection.

In this embodiment, Tf may include at least one of the following: a periodicity T of a beam detection signal in Embodiment 1 and Embodiment 2, a detection periodicity Tc of a CORESET in Embodiment 3, and a value Ts determined based on different subcarrier spacings SCSs. For example, the value Ts is a value that changes with a subcarrier spacing. A relationship between Ts and the SCS may be a proportional relationship, for example, for a subcarrier spacing of 120 kHz, Ts=10 ms, and for a subcarrier spacing of 60 kHz, Ts=10 x (120/60) ms=20 ms. Alternatively, Ts may be in a unit of a timeslot. The association between Ts and the subcarrier spacing may also be explicitly corresponding in a traversal manner, for example, a table describing a relationship between Ts and the subcarrier spacing.

For a manner of obtaining Tf, refer to a similar manner of obtaining T or Tc in the foregoing embodiment. Details are not described herein again.

Optionally, the UE may further obtain a related parameter such as an adjustment amount k used to scale the length of the beam detection interval.

S402: Determine a length of a beam detection interval based on the obtained Tf.

Optionally, if Tf includes Ts, the determined length of the beam detection interval may include Ts, max{Ts, T'}, min{Ts, T'}, max{k x Ts, T'} or min{k x Ts, T'}, where T' is a fixed value and may be preset, for example, may be configured by a base station or specified according to a standard.

Optionally, if Tf includes T, the determined length of the beam detection interval may include Tₛₕₒᵣₜ, T_{long}, k x Tₛₕₒᵣₜ (if k needs to be obtained), and k x T_{long} (if k needs to be obtained), max{T_{long}, T'}, max{k x T_{long}, T'}, min{T_{long}, T'} or min{k x T_{long}, T'} (if k needs to be obtained) in T in Embodiment 1/Embodiment 2, where T' is a fixed value and may be preset, for example, may be configured by a base station or specified according to a standard, or T' corresponds to the subcarrier spacing SCS.

Optionally, if Tf includes Tc, the determined length of the beam detection interval may include Tₛₕₒᵣₜ, T_{long}, k x Tₛₕₒᵣₜ (if k needs to be obtained), and k x T_{long} (if k needs to be obtained), max{T_{long}, T'}, max{k x T_{long}, T'} (if k needs to be obtained), min{T_{long}, T'} or min{k x T_{long}, T'} (if k needs to be obtained) in Tc in Embodiment 3, where T' is a fixed value and may be preset, for example, may be configured by a base station or specified according to a standard, or T' corresponds to the subcarrier spacing SCS.

If Tf includes Ts and T/Tc, the determined length of the beam detection interval may include max{T_{long},Ts}, max{k x T_{long}, Ts} (if k needs to be obtained), min{T_{long}, Ts}, min{k x T_{long}, Ts} (if k needs to be obtained), max{T_{long}, Ts, T'}, max{k x T_{long}, Ts, T'} (if k needs to be obtained), min{T_{long}, Ts, T'} or min{k x T_{long}, Ts, T'} (if k needs to be obtained). When Tf includes T, T_{long} corresponds to a periodicity T of a beam detection signal, and when Tf includes Tc, T_{long} corresponds to the detection periodicity Tc of the CORESET. T' is a fixed value and may be preset, for example, may be configured by a base station or specified according to a standard, or T' corresponds to the subcarrier spacing SCS.

The foregoing is merely an example of determining the length of the beam detection interval based on the obtained Tf. This application is not limited to the enumerated manners.

According to the beam failure detection method in this embodiment of this application, a proper length of the beam detection interval can be determined by considering related time information Tf used for beam detection, to implement effective beam failure detection.

### Embodiment 5

Embodiment 1 to Embodiment 4 are described from a perspective of determining a detection interval for beam failure detection before a beam failure declaration. FIG. 6 is a flowchart of a first embodiment of a method for beam monitoring according to this application. A difference from Embodiment 1 to Embodiment 4 lies in that this embodiment is described from a perspective of a beam failure detection procedure. The solutions for determining the length of the beam detection interval before the beam failure detection described in Embodiment 1 to Embodiment 4 may be applied to this embodiment, and content that is the same as or similar to that in Embodiment 1 to Embodiment 4 is not described in this embodiment again.

The method is applied to a UE side, and includes:
S501: Monitor a beam failure interval.

The beam failure interval is a time periodicity with a time length P, and in the time period, each used beam in a used beam set is in an abnormal state, where the used beam is a beam used to transmit a beam detection signal. In other words, if it is detected that each used beam in the used beam set is in an abnormal state in a time periodicity with a time length P, it may be determined that the time periodicity is a beam failure interval. With reference to the descriptions of the foregoing other embodiments, it may be learned that in this embodiment, the beam failure interval is a beam detection interval in which a beam failure instance exists and a detection result of each beam detection signal in the at least one beam detection signal does not meet a predetermined condition, and P is the length of the interval determined in the foregoing embodiments. For ease of differentiation, the beam failure interval is used for description in this embodiment.

In this embodiment of the present invention, a start time of the time periodicity is not limited. In a specific implementation process, the start time of the time periodicity may be set according to a specific requirement. For example, the start time of the time periodicity may be set to a sending time of a reference signal carried on a reference signal resource corresponding to one or more beams in the used beam set. Alternatively, the start time of the time periodicity may not be set. The beam failure interval is determined based on a condition in which a time periodicity with a time length P is detected and each used beam in the used beam set is in an abnormal state within the time period.

The beam may be specifically embodied as, for example, but is not limited to, a spatial domain transmission filter (spatial domain transmission filter). The beam may be specifically represented by, for example, but is not limited to, a reference signal resource corresponding to the beam. For example, a next-generation wireless communications system, that is, a new radio (new radio, NR) system, may use a channel state information reference signal (channel state information reference signal, CSI-RS) resource to represent the beam, and determine beam quality according to a CSI-RS resource (CSI-RS resource) corresponding to the beam. A CSI-RS resource corresponding to the beam may be indicated by using a CRI (CSI-RS resource indicator, CSI-RS resource indicator), and the beam quality may be specifically reflected as reference signal received power (reference signal received power, RSRP). For another example, the NR system may further use an SSB resource to represent a beam, and determine the beam quality according to the SSB resource corresponding to the beam. The SSB resource corresponding to the beam may be indicated by using an SSB index (index).

In a specific implementation process, according to a specific requirement, another reference signal resource may be further used to represent a beam, another indicator is used to indicate the reference signal resource, and another parameter is used to represent the beam quality. This is not limited in this embodiment of the present invention.

S502: Perform beam failure declaration if it is monitored that a quantity of consecutive beam failure intervals reaches a predetermined quantity threshold N. In each beam failure interval, each used beam in the used beam set is in an abnormal state. The used beam set includes at least one used beam. The length of the beam failure interval is determined based on a periodicity T of a beam detection signal resource corresponding to the at least one used beam and the predetermined quantity threshold N.

The predetermined quantity threshold N is N in Embodiment 1 to Embodiment 4.

The periodicity T of the beam detection signal resource is the periodicity T of the beam detection signal in Embodiment 1/Embodiment 2. For a limitation on the beam detection signal, refer to the description in Embodiment 1 or 2. The beam detection signal may include a reference signal, and may be specifically a CSI-RS. However, this application is not limited thereto.

Alternatively, the periodicity T of the beam detection signal resource in the step S502 may be replaced with the detection periodicity Tc of the CORESET in Embodiment 3, or may be replaced with the related time Tf in Embodiment 4.

Optionally, an additional condition may be set. For example, when it is monitored that a quantity of consecutive beam failure intervals reaches N, whether to perform beam failure declaration further needs to meet a predetermined condition. The predetermined condition may be that a quantity of times that the detection result of the beam detection signal that needs to be detected consecutively does not meet a predetermined condition reaches a preset value. For example, if there are a plurality of beam detection signals that need to be detected, the predetermined condition may be that a quantity of times that a detection result of a beam detection signal in a shortest periodicity consecutively does not meet the predetermined condition reaches at least the N, and a quantity of times that a detection result of a beam detection signal in a longest periodicity consecutively does not meet a predetermined condition reaches at least one.

Generally, when the used beam is in the abnormal state, it may indicate, for example, but is not limited to, that the used beam is unavailable, or whether the used beam is available cannot be determined. That the used beam is available means that communication transmission may be performed by using the used beam, that the used beam is unavailable means that communication transmission cannot be performed by using the used beam, and that whether the used beam is available cannot be determined means that whether communication transmission can be performed by using the used beam cannot be determined. For example, when the user equipment is in a moving state, a case in which the used beam no longer points to the user equipment occurs, or it cannot be determined whether the used beam still points to the user equipment. In this case, the used beam is in the abnormal state. For another example, when the user equipment is blocked, a case in which the beam cannot reach the user equipment may occur, or a case in which whether the used beam can reach the user equipment cannot be determined. In this case, the used beam is in the abnormal state. For yet another example, when a periodicity of the reference signal resource corresponding to the used beam is too long, a periodicity of detecting the used beam quality is too long, which results in expiring of previously measured used beam quality. Therefore, a case in which used beam quality cannot be determined occurs. In this case, the used beam is in the abnormal state. In addition, there may be another case in which the used beam quality cannot be determined. In other words, in each beam failure interval, a determining condition for determining that the used beam is in the abnormal state includes at least one of the following: the reference signal resource corresponding to the used beam does not exist in the beam failure interval; a reference signal resource corresponding to the used beam exists in the beam failure interval, but beam quality detection is not performed on the used beam according to the reference signal resource; and in the beam failure interval, beam quality obtained by performing beam quality detection on the used beam according to the reference signal resource corresponding to the used beam is lower than a preset quality threshold.

In this case, any condition that can be used to determine that the foregoing cases occur may be used as a determining condition for determining that the used beam is in the abnormal state. As can be seen, the determining conditions that the used beam is in the abnormal state described herein are merely examples and are not exhaustive of all determining conditions. Therefore, the determining conditions are not intended to limit the scope of this embodiment of the present invention. In a specific implementation process, a determining condition for determining that the used beam is in the abnormal state may be set according to a specific requirement. Referring to the descriptions of the signal 1 and the signal 2 in Embodiment 1, it is assumed that the signal 1 is sent by using a beam 1, and the signal 2 is sent by using the beam 2. If a detection result of the signal 1 does not meet a predetermined condition, the beam 1 is in the abnormal state. If a detection result of the signal 2 does not meet a predetermined condition, the beam 2 is in the abnormal state.

Generally, there may be more than one used beam, and therefore, a set of used beams may be used to refer to the used beam that may be used for communication transmission, where the set of used beams generally includes at least one used beam.

In a specific implementation process, the performing beam failure declaration may be specifically embodied as, for example, but not limited to, sending a beam recovery request. A specific operation of performing beam failure declaration is not limited in this embodiment of the present invention.

For specific content of the beam recovery request, refer to the prior art. The performing beam failure declaration may be, for example, but is not limited to, starting a beam failure recovery timer; selecting an available alternative beam set according to an alternative beam threshold, and reporting a corresponding L1-RSRP measurement result; determining a q_{new} of an alternative beam and an RACH resource corresponding to the q_{new} according to an algorithm, and sending a beam recovery request. A specific operation of performing beam failure declaration is not limited in this embodiment of the present invention. For specific content of the beam recovery request, refer to the prior art. For example, the beam recovery request may be sending access information on a random access resource (which may be a random access resource allocated by the node 100 or a predefined random access resource) by using a beam corresponding to the q_{new} and according to an access sequence allocated by the node 100. Alternatively, the beam failure recovery request may be sent by using a PUCCH resource allocated by the node 100.

Optionally, the length of the beam failure interval includes one of the following, but is not limited to the following examples:
┌T_{long}/N┐, T_{long}/N, Tₛₕₒᵣₜ X ┌(T_{long}/N/Tₛₕₒᵣₜ)┐, max{Tₛₕₒᵣₜ X ┌(T_{long}/N/Tₛₕₒᵣₜ)┐, T'}, max{Tₛₕₒᵣₜ, ┌T_{long}/N┐}, max {Tshort, T_{long}/N}, max max{Tₛₕₒᵣₜ, ┌T_{long}/N┐}, T'}, max{max{Tₛₕₒᵣₜ, {Tₛₕₒᵣₜ, T_{long}/N}, T'}, min{T_{long}, Tₛₕₒᵣₜ x N}, and max{Tₛₕₒᵣₜ, {Tₛₕₒᵣₜ, [T_{long}/N/T'] x T'}, where T' is a predetermined duration value, a symbol max{ } indicates taking a maximum value, min{ } indicates taking a minimum value, and a symbol ┌ ┐ indicates rounding up. T' may be a duration value specified in a standard, or may be configured by the access node for the UE. Alternatively, T' may be a value determined based on different subcarrier spacings (subcarrier spacing, SCS for short), for example, a value that changes with a subcarrier spacing. A relationship between T' and the SCS may be a proportional relationship. For example, for a subcarrier spacing of 120 kHz, T'=10 ms, and for a subcarrier spacing of 60 kHz, T'=10 x (120/60) ms=20 ms. Alternatively, T' may be in a unit of a slot. An association between T' and the subcarrier spacing may alternatively be that T' explicitly corresponds to the subcarrier spacing in a traversal manner, for example, by using a table describing a relationship between T' and the subcarrier spacing. For related explanations of Tₛₕₒᵣₜ and T_{long}, refer to the foregoing embodiments. Details are not described herein again.

Optionally, the length of the beam failure interval includes one of the following, but is not limited to the following examples:
┌k x T_{long}/N┐, k x T_{long}/N, Tₛₕₒᵣₜ x ┌(k x T_{long}/N/Tₛₕₒᵣₜ)┐, max{Tₛₕₒᵣₜ x ┌(k x T_{long}/N/Tₛₕₒᵣₜ)┐, T'}, max{Tₛₕₒᵣₜ, ┌k x T_{long}/N┐}, max{Tₛₕₒᵣₜ, k x T_{long}/N}, max{max{Tₛₕₒᵣₜ, ┌k x T_{long}/N┐}, T'}, max{Tₛₕₒᵣₜ, {max{Tₛₕₒᵣₜ, k x T_{long}/N}, T'}, min{T_{long}, Tₛₕₒᵣₜ x N x k}, and max{Tₛₕₒᵣₜ, {Tₛₕₒᵣₜ, ┌k x T_{long}/N/T'┐ x T'}, where T' is a predetermined duration value, a symbol max{ } indicates taking a maximum value, min{ } indicates taking a minimum value, and a symbol ┌ ┐ indicates rounding up. T' may be a duration value specified in a standard, may be configured by the access node for the UE, or may be a value determined based on different subcarrier spacings SCSs. For a specific description of a manner of obtaining the length of the beam detection interval when k is introduced, refer to the foregoing example. Details are not described herein again. For related explanations of Tₛₕₒᵣₜ and T_{long}, refer to the foregoing embodiments. Details are not described herein again.

According to the beam monitoring method in this embodiment of this application, effective beam monitoring is implemented by using a proper length of a beam failure interval.

It should be noted that in the foregoing embodiments, a start time of the detection interval/beam failure instance reporting periodicity (if a beam failure instance reporting solution is involved) is not limited in this embodiment of the present invention, In a specific implementation process, a start time may be set according to a specific requirement. For example, the start time may be set to a sending time of a beam detection signal carried on the beam detection signal resource. Alternatively, a timeslot in which configuration is determined through higher layer signaling (for example, RRC) may be used as the start time, or a timeslot after a periodicity of time or several timeslots specified in a protocol delayed from a current timeslot in which configuration is determined through higher layer signaling may be used as the start time. A time length may be related to a subcarrier spacing SCS.

The foregoing embodiments mainly describes the solutions provided in the embodiments of this application from a perspective of interaction between entities in a system or a perspective of an internal implementation process of an entity. It may be understood that to implement the foregoing functions, the foregoing various entities include hardware structures and/or software modules corresponding to the various functions. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, functional module division may be performed on the UE and the access node according to the examples of the methods. For example, various functional modules may be divided according to the corresponding functions, or two or more functions may be integrated into one processing module. The integrated module may be implemented in a form of hardware, or may be implemented in a form of a software functional module. It should be noted that, in this embodiment of this application, module division is exemplary, and is merely a logical function division. In actual implementation, another division manner may be used. An example in which functional modules are divided based on functions is used below for description.

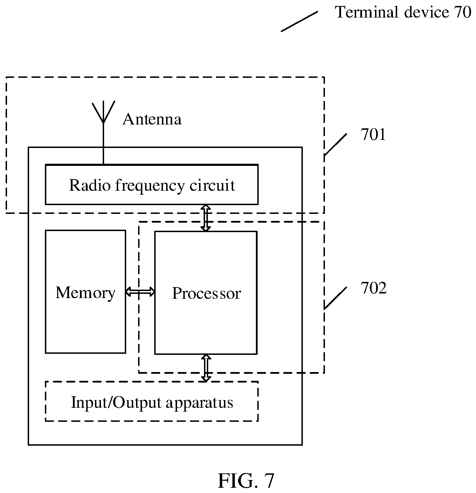

An embodiment of this application further provides a terminal device. The terminal device may be configured to perform the steps performed by the UE in any one of FIG. 2 to FIG. 6. FIG. 7 is a simplified schematic structural diagram of a terminal device. For ease of understanding and illustration, an example in which the terminal device is a mobile phone is used in FIG. 7. As shown in FIG. 7, the terminal device 70 includes a processor, a memory, a radio frequency circuit, an antenna, and an input/output apparatus. The processor is mainly configured to: process a communications protocol and communication data, control the terminal device 70, execute a software program, process data of the software program, and the like. The memory is mainly configured to store a software program and data. The radio frequency circuit is mainly configured to: perform conversion between a baseband signal and a radio frequency signal, and process the radio frequency signal. The antenna is mainly configured to send and receive a radio frequency signal in a form of an electromagnetic wave. The input/output apparatus, such as a touchscreen, a display, or a keyboard, is mainly configured to: receive data input by a user and output data to the user. It should be noted that some types of terminal devices 70 may have no input/output apparatus. The memory and the processor may be integrated together or may be disposed independently. In addition, the radio frequency circuit and the processor may be integrated together or may be disposed independently.

When the processor needs to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device 70, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 7 shows only one memory and one processor. An actual terminal device product may include one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have transmission and reception functions may be considered as a transceiver unit of the terminal device 70, and the processor that has a processing function may be considered as a processing unit of the terminal device 70. As shown in FIG. 7, the terminal device 70 includes the transceiver unit 701 and the processing unit 702. The transceiver unit may also be referred to as a transceiver (including a transmitter and/or a receiver), a transceiver machine, a transceiver apparatus, a transceiver circuit, or the like. The processing unit may also be referred to as a processor, a processing board, a processing module, a processing apparatus, or the like. Optionally, a component that is in the transceiver unit 701 and that is configured to implement a receiving function may be considered as a receiving unit, and a component that is in the transceiver unit 701 and that is configured to implement a sending function may be considered as a sending unit. In other words, the transceiver unit 701 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like. In some embodiments, the transceiver unit 701 and the processing unit 702 may be integrated together, or may be disposed independently. In addition, all functions of the processing unit 702 may be integrated into one chip for implementation. Alternatively, some functions may be integrated into one chip for implementation and some other functions are integrated into one or more other chips for implementation. This is not limited in this application. The term "unit" used in this specification may refer to an application-specific integrated circuit (ASIC), an electronic circuit, a processor (shared, dedicated, or group) and memory, or a combinational logic circuit that executes one or more software or firmware programs, and/or other suitable components that provide the function.

For example, in one implementation, if a scenario in which the UE interacts with the access node is involved, the transceiver unit 701 can be used to perform S101 in FIG. 2, and/or another step in this application. The processing unit 702 may be configured to perform S101 and/or S102 in FIG. 2, and/or another step in this application.

For example, in another implementation, the transceiver unit 701 is configured to perform S203 in FIG. 3 and/or another step in this application. The processing unit 702 is configured to perform S203 and/or S204 in FIG. 3, and/or another step in this application.

For example, in one implementation, if a scenario in which the UE interacts with the access node is involved, the transceiver unit 701 can be used to perform S301 in FIG. 4, and/or another step in this application. The processing unit 702 may be configured to perform S301 and/or S302 in FIG. 4, and/or another step in this application.

For example, in one implementation, if a scenario in which the UE interacts with the access node is involved, the transceiver unit 701 can be used to perform S401 in FIG. 5, and/or another step in this application. The processing unit 702 may be configured to perform S401 and/or S402 in FIG. 5, and/or another step in this application.

For example, in one implementation, if a scenario in which the UE interacts with the access node is involved, the transceiver unit 701 can be used to communicate with the access node, and/or another step in this application. The processing unit 702 may be configured to perform S501 and/or S502 in FIG. 6, and/or another step in this application.

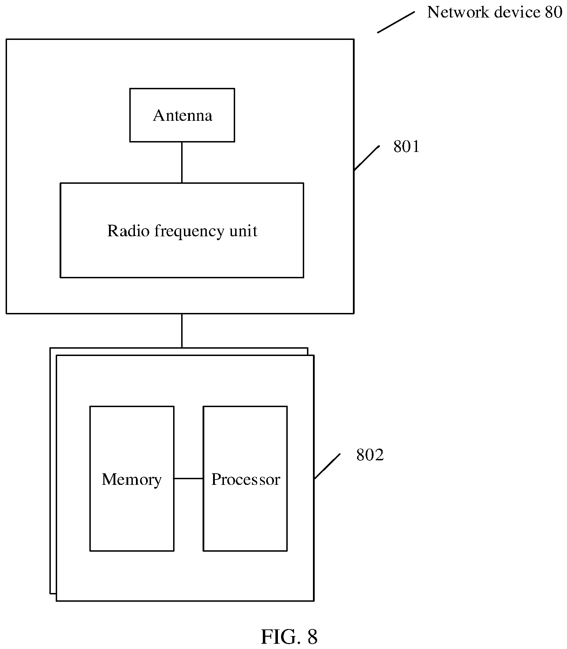

An embodiment of this application further provides a network device. The network device can be used as an access node or transmission receiving point to perform the steps performed by the access node in any one of FIG. 2 to FIG. 6 if there is a scenario in which the UE interacts with the access node. FIG. 8 is a simplified schematic structural diagram of a network device. A network device 80 includes a part 801 and a part 802. The part 801 is mainly configured to send and receive a radio frequency signal and perform conversion between the radio frequency signal and a baseband signal. The part 802 is mainly configured to perform baseband processing, control the network device 80, and the like. The part 801 may be usually referred to as a transceiver unit, a transceiver machine, a transceiver circuit, a transceiver, or the like. The part 802 is usually a control center of the network device 80, and may usually be referred to as a processing unit, a control unit, a processor, a controller, or the like. The part 802 is configured to control the network device 80 to perform the steps performed by the access node/transmission and reception point, where the access node/transmission and reception point is of the measurement function entity of the access side or is used as the measurement function entity of the access side in the foregoing related embodiments. For details, refer to the foregoing descriptions of the related parts.

The transceiver unit in the part 801 may also be referred to as a transceiver machine, a transceiver, or the like. The transceiver unit includes an antenna and a radio frequency unit. The radio frequency unit is mainly configured to perform radio frequency processing. Optionally, a component that is in the part 801 and that is configured to implement a receiving function may be considered as a receiving unit, and a component configured to implement a sending function may be considered as a sending unit. In other words, the part 801 includes the receiving unit and the sending unit. The receiving unit may also be referred to as a receiver machine, a receiver, a receiver circuit, or the like. The sending unit may be referred to as a transmitter machine, a transmitter, a transmitter circuit, or the like.

The part 802 may include one or more boards. Each board may include one or more processors and one or more memories, and the processor is configured to read and execute a program in the memory, to implement a baseband processing function and control the network device 80. If there are a plurality of boards, the boards may be interconnected to enhance a processing capability. In an optional implementation, the plurality of boards may share one or more processors, or the plurality of boards may share one or more memories, or the plurality of boards may simultaneously share one or more processors. The memory and the processor may be integrated together, or may be disposed independently. In some embodiments, the part 801 and the part 802 may be integrated together or may be disposed independently. In addition, all functions of the part 802 may be integrated into one chip for implementation. Alternatively, some functions may be integrated into one chip for implementation and some other functions are integrated into one or more other chips for implementation. This is not limited in this application.

For example, in an implementation, if a scenario in which the UE interacts with the access node is involved, the transceiver unit may be configured to perform the step S101 in FIG. 2 in which the access node sends the obtained information to the UE, and/or another step in this application. When the corresponding information obtained by the UE is sent by the access node, the processing unit may be configured to perform the step S101 in FIG. 2 in which the corresponding information is generated, and/or another step in this application.

For example, in another implementation, the transceiver unit is configured to perform S202 in FIG. 3 and/or another step in this application. The processing unit is configured to perform S201 in FIG. 3, and/or another step in this application.

For example, in an implementation, if a scenario in which the UE interacts with the access node is involved, the transceiver unit may be configured to perform the step S301 in FIG. 4 in which the access node sends the obtained information to the UE, and/or another step in this application. When the corresponding information obtained by the UE is sent by the access node, the processing unit may be configured to perform the step S301 in FIG. 4 in which the corresponding information is generated, and/or another step in this application.

For example, in an implementation, if a scenario in which the UE interacts with the access node is involved, the transceiver unit may be configured to perform the step S401 in FIG. 5 in which the access node sends the obtained information to the UE, and/or another step in this application. When the corresponding information obtained by the UE is sent by the access node, the processing unit may be configured to perform the step S401 in FIG. 5 in which the corresponding information is generated, and/or another step in this application.

The apparatus on a terminal side provided above may be a terminal device, or may be a chip or a functional module in a terminal device, and may implement the foregoing method by software or hardware, or by hardware executing corresponding software.

A specific implementation of the apparatus of the network side provided above may be a measurement device. For example, the apparatus may be an access node device, or may be a chip or a functional module in an access node device. The method may be implemented by using software, hardware, or by executing corresponding software by hardware.

For explanations and beneficial effects of related content in any one of the terminal device, the network device, and the corresponding apparatus provided above, refer to the corresponding method embodiment provided above. Details are not described herein again.

This application further provides a beam failure detection system, including the UE (or a UE side apparatus implementing the foregoing UE function) and the access node (or an access side apparatus or a transmission receiving point implementing the foregoing access node function) in the foregoing implementations.

This application further provides a computer program product. When the computer program product runs on a computer, the computer is enabled to perform any method provided above.

This application also provides a chip that stores an instruction. When the instruction is run on the above devices, the devices are enabled to execute the methods provided above.

This application further provides a computer storage medium, and the computer storage medium stores a computer program (instruction). When the program (instruction) is run on a computer, the computer is enabled to perform the method according to any one of the foregoing aspects.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A proposal of the foregoing solution in new radio (new radio, NR for short) is specifically the following description. A person skilled in the art may combine the solution in the proposal into the foregoing embodiments according to the description of the proposal, to implement a related technical solution: introducing the beam failure instance indication into the NR. This allows the physical layer of the UE to provide periodic indications to the higher layer for the beam failure instances. However, some further explanations are needed for this indication solution. (Beam failure instance indication is introduced to NR, which allows UE PHY layer to provide periodic indications to higher layer on the beam failure instance. However, some further clarifications are needed on this indication scheme.

First, what is a beam failure instance? In our understanding, when evaluation results of all BFD RSs that can be measured by the UE physical layer during an indication interval are higher than a given BLER threshold, it is a beam failure instance, and the UE physical layer should send a flag to a MAC layer. (What is a beam failure instance? In our understanding, when the evaluation results of all BFD RSs that UE PHY layer can measure during one indication interval are above a given BLER threshold, it is a beam failure instance and UE PHY layer should send a flag to MAC layer.)

Second, what is a lower bound X of the indication interval? [10] milliseconds is not a good choice, because too much time is consumed before the beam failure declaration. Because the higher layer of the UE declares a beam failure only after receiving Nr of consecutive beam failure instance indications from NrOfBeamFailureInstance of the physical layer of the UE, the time required for beam failure detection is [10 x Nr] ms. A shorter time limit is obviously needed to ensure a fast enough beam failure recovery mechanism in the NR. On the other hand, the use of the shortest RS periodicity or much lower time limit < < [10] ms may lead to a problem that when a beam failure is declared, an RS with a longer periodicity cannot even be evaluated at once, which violates an agreement in the protocol that a beam failure means that all PDCCH beams fail. (Secondly, what is the lower bound X of the indication interval? On the one hand, [10] ms seems not a good option, since the time consumed before beam failure declaration is too much. Considering UE higher layer would only declare beam failure after *NrOfBeamFailurelnstance* Nr consecutive beam failure instance indication from UE PHY layer, the time needed for beam failure detection is [10 x Nr] ms. A much shorter time bound is clearly needed, to ensure a fast-enough beam failure recovery mechanism in NR. On the other hand, using the shortest RS periodicity or a much lower time bound << [10] ms may lead to the issue that the RS with a longer periodicity can be not evaluated even once when beam failure is declared, which violates the agreements that beam failure means all PDCCH beam fails.)

A proper indication interval should ensure that all PDCCH beams are evaluated, i.e., the UE evaluates the BFD RSs in the set *q̅*₀ according to a hypothetical PDCCH BLER prior to the beam failure declaration. The UE should consider a longest periodicity and NrOfBeamFailureInstance to obtain the beam failure instance indication interval. (A proper indication interval has to guarantee the evaluation of all PDCCH beams, i.e., BFD RSs in the set *q̅*₀ that UE assesses in terms of hypothetical PDCCH BLER before beam failure declaration. UE should consider the longest periodicity and *NrOfBeamFailureInstance* to derive the beam failure instance indication interval.)

Suggestion x: Support the UE to determine a proper beam failure instance indication interval to ensure that all evaluated BFD RSs are evaluated according to the longest periodicity and the NrOfBeamFailureInstance. (***Proposal x: Support UE to determine a proper beam failure instance indication interval to guarantee the evaluation of all assessed BFD RSs based on the longest periodicity and NrOfBeamFailureInstance.***)

As can be seen, it is indicated in the proposal that the proper indication interval (that is, corresponding to the length of the beam detection interval described above) should ensure that all PDCCH beams are evaluated, that is, before the beam failure declaration, the UE evaluates a beam failure detection reference signal (beam failure detection RS, BFD RS for short) in the set according to the hypothetical PDCCH BLER. The UE should consider the longest periodicity and NrOfBeamFailureInstance to derive the beam failure instance indication interval (i.e., the quantity N of consecutive beam failure instances corresponding to the beam failure declaration described above).

Finally, a preferred solution in the proposal is to support the UE to determine a proper beam failure instance indication interval to ensure that all evaluated BFD RSs are evaluated according to the longest periodicity and the NrOfBeamFailureInstance.

Although this application is described with reference to the embodiments, in a process of implementing this application that claims protection, persons skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a meaning of plurality. A single processor/controller or another unit may implement several functions enumerated in the claims. Some measures are recorded in dependent claims that are different from each other, but this does not mean that these measures cannot be combined to produce a better effect.

Although this application is described with reference to specific features and the embodiments thereof, obviously, various modifications and combinations may be made to them without departing from the spirit and scope of this application. Correspondingly, the specification and accompanying drawings are merely example description of this application defined by the accompanying claims, and is considered as any of or all modifications, variations, combinations or equivalents that cover the scope of this application. Obviously, a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A beam failure detection method, wherein the method comprises:
obtaining related time information Tf used for beam detection and an adjustment amount k, wherein Tf comprises a periodicity T of at least one beam detection signal; and
performing beam failure detection in a beam detection interval, wherein a length of the beam detection interval is determined based on Tf and k.

2. The method according to claim 1, wherein the periodicity T of the at least one beam detection signal comprises: a periodicity Tₛₕₒᵣₜ of a beam detection signal with a shortest periodicity in the at least one beam detection signal; and
that a length of the beam detection interval is determined based on Tf and k comprises: the length of the beam detection interval is determined based on Tₛₕₒᵣₜ and k.

3. The method according to claim 2, wherein the length of the beam detection interval comprises k x Tₛₕₒᵣₜ.

4. The method according to claim 1, wherein the periodicity T of the at least one beam detection signal comprises a periodicity T_{long} of a beam detection signal with a longest periodicity in the at least one beam detection signal; and
that a length of the beam detection interval is determined based on Tf and k comprises: the length of the beam detection interval is determined based on T_{long} and k.

5. The method according to claim 1, wherein
Tf further comprises at least one of the following: a value Ts determined based on different subcarrier spacings SCSs, and a detection periodicity Tc of at least one control resource set CORESET.

6. A beam failure detection method, wherein the method comprises:
generating related time information Tf used for beam detection and an adjustment amount k, wherein Tf comprises a periodicity T of at least one beam detection signal; and
sending Tf and k to a terminal device, to configure a beam detection interval, wherein a length of the beam detection interval is determined based on Tf and k.

7. The method according to claim 6, wherein the periodicity T of the at least one beam detection signal comprises: a periodicity Tₛₕₒᵣₜ of a beam detection signal with a shortest periodicity in the at least one beam detection signal; and
that a length of the beam detection interval is determined based on Tf and k comprises: the length of the beam detection interval is determined based on Tₛₕₒᵣₜ and k.

8. The method according to claim 7, wherein the length of the beam detection interval comprises k x Tₛₕₒᵣₜ.

9. The method according to claim 6, wherein the periodicity T of the at least one beam detection signal comprises a periodicity T_{long} of a beam detection signal with a longest periodicity in the at least one beam detection signal; and
that a length of the beam detection interval is determined based on Tf and k comprises: the length of the beam detection interval is determined based on T_{long} and k.

10. The method according to claim 6, wherein
Tf further comprises at least one of the following: a value Ts determined based on different subcarrier spacings SCSs, and a detection periodicity Tc of at least one control resource set CORESET.

11. A beam failure detection method, wherein the method comprises:
obtaining a periodicity T of at least one beam detection signal and a quantity N of consecutive beam failure instances corresponding to beam failure declaration, wherein the beam detection signal is sent by using a beam, and one beam failure instance is that a detection result of each beam detection signal in the at least one beam detection signal does not meet a predetermined condition in at least one beam detection interval; and
determining a length of the beam detection interval based on the obtained T and N.

12. The method according to claim 11, wherein
the periodicity T of the at least one beam detection signal comprises: a periodicity Tₛₕₒᵣₜ of a beam detection signal with a shortest periodicity in the at least one beam detection signal and/or a periodicity T_{long} of a beam detection signal with a longest periodicity in the at least one beam detection signal; and
the determining a length of the beam detection interval based on the obtained T and N comprises:
determining the length of the beam detection interval based on Tₛₕₒᵣₜ and/or T_{long} and N.

13. The method according to claim 12, wherein
the determined length of the beam detection interval comprises one of the following:
┌T_{long}/N┐, T_{long}/N, Tₛₕₒᵣₜ x ┌(T_{long}/N/Tₛₕₒᵣₜ)┐, max { Tₛₕₒᵣₜ x ┌(T_{long}/N/Tₛₕₒᵣₜ)┐, T'}, max{Tₛₕₒᵣₜ, ┌T_{long}/N┐}, max{Tₛₕₒᵣₜ, T_{long}/N}, max{max{Tₛₕₒᵣₜ, ┌T_{long}/N┐}, T'}, max{max{Tₛₕₒᵣₜ, T_{long}/N}, T'}, min{T_{long}, Tshort x N}, and max{Tₛₕₒᵣₜ, ┌T_{long}/N/T'┐ x T'}, wherein
T' is a predetermined duration value, a symbol max{ } indicates taking a maximum value, min{ } indicates taking a minimum value, and a symbol ┌ ┐ indicates rounding up.

14. The method according to claim 11, wherein the method further comprises: obtaining an adjustment amount k; and
the determining a length of the beam detection interval based on the obtained T and N comprises:
determining the length of the beam detection interval based on T, N, and k.

15. The method according to claim 14, wherein
the periodicity T of the at least one beam detection signal comprises: a periodicity Tₛₕₒᵣₜ of a beam detection signal with a shortest periodicity in the at least one beam detection signal and/or a periodicity T_{long} of a beam detection signal with a longest periodicity in the at least one beam detection signal; and
the determined length of the beam detection interval comprises one of the following:
┌k x T_{long}/N┐, k x T_{long}/N, Tₛₕₒᵣₜ x ┌(k x T_{long}/N/Tₛₕₒᵣₜ)┐, max{Tₛₕₒᵣₜ x ┌(k x T_{long}/N/Tₛₕₒᵣₜ)┐, T'}, max{Tₛₕₒᵣₜ, ┌k x T_{long}/N┐}, max{Tₛₕₒᵣₜ, k x T_{long}/N}, max{max{Tₛₕₒᵣₜ, [k x T_{long}/N┐}, T'}, max{max{Tₛₕₒᵣₜ, k x T_{long}/N}, T'}, min{T_{long}, Tₛₕₒᵣₜ x N x k}, and max {Tₛₕₒᵣₜ, [k x T_{long}/N/T'┐ x T'}, wherein
T' is a predetermined duration value, a symbol max{ } indicates taking a maximum value, min{ } indicates taking a minimum value, and a symbol ┌ ┐ indicates rounding up.

16. A beam failure detection method, wherein the method comprises:
generating adjustment amount information, wherein the adjustment amount information is used by a terminal device to adjust a length of a beam detection interval; and
sending the adjustment amount information to the terminal device; wherein
the length of the beam detection interval is further determined based on a periodicity T of at least one beam detection signal and a quantity N of consecutive beam failure instances corresponding to beam failure declaration, and the beam detection signal is sent by using a beam, and one beam failure instance is that a detection result of each beam detection signal in the at least one beam detection signal does not meet a predetermined condition in at least one beam detection interval.

17. A beam failure detection apparatus, wherein the apparatus comprises:
a transceiver unit, configured to obtain related time information Tf used for beam detection and an adjustment amount k, wherein Tf comprises a periodicity T of at least one beam detection signal; and
a processing unit, configured to perform beam failure detection in a beam detection interval, wherein a length of the beam detection interval is determined based on Tf and k.

18. The apparatus according to claim 17, wherein the periodicity T of the at least one beam detection signal comprises: a periodicity Tₛₕₒᵣₜ of a beam detection signal with a shortest periodicity in the at least one beam detection signal; and
that a length of the beam detection interval is determined based on Tf and k comprises: the length of the beam detection interval is determined based on Tₛₕₒᵣₜ and k.

19. The apparatus according to claim 18, wherein the length of the beam detection interval comprises k x Tₛₕₒᵣₜ.

20. The apparatus according to claim 17, wherein the periodicity T of the at least one beam detection signal comprises: a periodicity T_{long} of a beam detection signal with a longest periodicity in the at least one beam detection signal; and
that a length of the beam detection interval is determined based on Tf and k comprises: the length of the beam detection interval is determined based on T_{long} and k.

21. The apparatus according to claim 17, wherein
Tf further comprises at least one of the following: a value Ts determined based on different subcarrier spacings SCSs, and a detection periodicity Tc of at least one control resource set CORESET.

22. A beam failure detection apparatus, wherein the apparatus comprises:
a processing unit, configured to generate a related time information Tf used for beam detection and an adjustment amount k, wherein Tf comprises a periodicity T of at least one beam detection signal; and
a transceiver unit, configured to send Tf and k to a terminal device, to configure a beam detection interval, wherein a length of the beam detection interval is determined based on Tf and k.

23. The apparatus according to claim 22, wherein the periodicity T of the at least one beam detection signal comprises: a periodicity Tₛₕₒᵣₜ of a beam detection signal with a shortest periodicity in the at least one beam detection signal; and
that a length of the beam detection interval is determined based on Tf and k comprises: the length of the beam detection interval is determined based on Tₛₕₒᵣₜ and k.

24. The apparatus according to claim 23, wherein the length of the beam detection interval comprises k x Tₛₕₒᵣₜ.

25. The apparatus according to claim 22, wherein the periodicity T of the at least one beam detection signal comprises: a periodicity T_{long} of a beam detection signal with a longest periodicity in the at least one beam detection signal; and
that a length of the beam detection interval is determined based on Tf and k comprises: the length of the beam detection interval is determined based on T_{long} and k.

26. The apparatus according to claim 22, wherein
Tf further comprises at least one of the following: a value Ts determined based on different subcarrier spacings SCSs, and a detection periodicity Tc of at least one control resource set CORESET.

27. A beam failure detection apparatus, wherein the apparatus comprises:
a processing unit, configured to obtain a periodicity T of at least one beam detection signal and a quantity N of consecutive beam failure instances corresponding to a beam failure declaration; and determine a length of the beam detection interval based on the obtained T and N, wherein
the beam detection signal is sent by using a beam, and one beam failure instance is that a detection result of each beam detection signal in the at least one beam detection signal does not meet a predetermined condition in at least one beam detection interval.

28. The apparatus according to claim 27, wherein
the periodicity T of the at least one beam detection signal comprises: a periodicity Tₛₕₒᵣₜ of a beam detection signal with a shortest periodicity in the at least one beam detection signal and/or a periodicity T_{long} of a beam detection signal with a longest periodicity in the at least one beam detection signal; and
the determining a length of the beam detection interval based on the obtained T and N comprises:
determining the length of the beam detection interval based on Tₛₕₒᵣₜ and/or T_{long} and N.

29. The apparatus according to claim 28, wherein
the determined length of the beam detection interval comprises one of the following:
┌T_{long}/N┐, T_{long}/N, Tshort x ┌(T_{long}/N/Tₛₕₒᵣₜ)┐, max { Tₛₕₒᵣₜ x ┌(T_{long}/N/Tₛₕₒᵣₜ)┐, T'}, max {Tₛₕₒᵣₜ, ┌T_{long}/N┐}, max{Tₛₕₒᵣₜ, T_{long}/N}, max{max{Tₛₕₒᵣₜ, ┌T_{long}/N┐}, T'}, max {max{Tₛₕₒᵣₜ, T_{long}/N}, T'}, min{T^{long}, T^{short} x N}, and max{T^{short}, ┌T^{long}/N/T'┐ x T'}, wherein
T' is a predetermined duration value, a symbol max{ } indicates taking a maximum value, min{ } indicates taking a minimum value, and a symbol ┌ ┐ indicates rounding up.

30. The apparatus according to claim 27, wherein the apparatus further comprises: obtaining an adjustment amount k; and
the determining a length of the beam detection interval based on the obtained T and N comprises:
determining the length of the beam detection interval based on T, N, and k.

31. The apparatus according to claim 30, wherein
the periodicity T of the at least one beam detection signal comprises: a periodicity Tₛₕₒᵣₜ of a beam detection signal with a shortest periodicity in the at least one beam detection signal and/or a periodicity T_{long} of a beam detection signal with a longest periodicity in the at least one beam detection signal; and
the determined length of the beam detection interval comprises one of the following:
┌k x T_{long}/N┐, k x T_{long}/N, Tₛₕₒᵣₜ x ┌(k x T_{long}/N/Tₛₕₒᵣₜ)┐, max{Tₛₕₒᵣₜ x [(k x T_{long}/N/Tₛₕₒᵣₜ)┐,T'}, max{Tₛₕₒᵣₜ, ┌k x T_{long}/N┐}, max{Tₛₕₒᵣₜ, k x T_{long}/N}, max{max{Tₛₕₒᵣₜ, ┌k x T_{long}/N┐}, T'}, max {max {T_{short,} k x T_{long}/N}, T'}, min {T_{long}, Tₛₕₒᵣₜ x N x k}, and max{Tₛₕₒᵣₜ, ┌k x T_{long}/N/T'┐ x T'}, wherein
T' is a predetermined duration value, a symbol max{ } indicates taking a maximum value, min{ } indicates taking a minimum value, and a symbol ┌ ┐ indicates rounding up.

32. A beam failure detection apparatus, wherein the apparatus comprises:
a processing unit, configured to generate adjustment amount information, wherein the adjustment amount information is used by a terminal device to adjust a length of a beam detection interval; and
a transceiver unit, configured to send the adjustment amount information to the terminal device, wherein
the length of the beam detection interval is further determined based on a periodicity T of at least one beam detection signal and a quantity N of consecutive beam failure instances corresponding to a beam failure declaration, and the beam detection signal is sent by using a beam, and one beam failure instance is that a detection result of each beam detection signal in the at least one beam detection signal does not meet a predetermined condition in at least one beam detection interval.

33. A beam failure detection apparatus, wherein the apparatus comprises:
a transceiver, configured to obtain related time information Tf used for beam detection and an adjustment amount k, wherein Tf comprises a periodicity T of at least one beam detection signal; and
a processor, configured to perform beam failure detection in a beam detection interval, wherein a length of the beam detection interval is determined based on Tf and k.

34. The apparatus according to claim 33, wherein the periodicity T of the at least one beam detection signal comprises: a periodicity Tₛₕₒᵣₜ of a beam detection signal with a shortest periodicity in the at least one beam detection signal; and
that a length of the beam detection interval is determined based on Tf and k comprises: the length of the beam detection interval is determined based on Tₛₕₒᵣₜ and k.

35. The apparatus according to claim 18, wherein the length of the beam detection interval comprises k x Tₛₕₒᵣₜ.

36. The apparatus according to claim 33, wherein the periodicity T of the at least one beam detection signal comprises: a periodicity T_{long} of a beam detection signal with a longest periodicity in the at least one beam detection signal; and
that a length of the beam detection interval is determined based on Tf and k comprises: the length of the beam detection interval is determined based on T_{long} and k.

37. The apparatus according to claim 33, wherein
Tf further comprises at least one of the following: a value Ts determined based on different subcarrier spacings SCSs, and a detection periodicity Tc of at least one control resource set CORESET.

38. A beam failure detection apparatus, wherein the apparatus comprises:
a processor, configured to generate a related time information Tf used for beam detection and an adjustment amount k, wherein Tf comprises a periodicity T of at least one beam detection signal; and
a transceiver, configured to send Tf and k to a terminal device, to configure a beam detection interval, wherein a length of the beam detection interval is determined based on Tf and k.

39. The apparatus according to claim 38, wherein the periodicity T of the at least one beam detection signal comprises: a periodicity Tₛₕₒᵣₜ of a beam detection signal with a shortest periodicity in the at least one beam detection signal; and
that a length of the beam detection interval is determined based on Tf and k comprises: the length of the beam detection interval is determined based on Tₛₕₒᵣₜ and k.

40. The apparatus according to claim 39, wherein the length of the beam detection interval comprises k x Tₛₕₒᵣₜ.

41. The apparatus according to claim 38, wherein the periodicity T of the at least one beam detection signal comprises: a periodicity T_{long} of a beam detection signal with a longest periodicity in the at least one beam detection signal; and
that a length of the beam detection interval is determined based on Tf and k comprises: the length of the beam detection interval is determined based on T_{long} and k.

42. The apparatus according to claim 38, wherein
Tf further comprises at least one of the following: a value Ts determined based on different subcarrier spacings SCSs, and a detection periodicity Tc of at least one control resource set CORESET.

43. A beam failure detection system, wherein the system comprises:
the apparatus according to any one of claims 17 to 21, and the apparatus according to any one of claims 22 to 26; or
the apparatus according to any one of claims 27 to 31, and the apparatus according to claim 32; or
the apparatus according to any one of claims 33 to 37, and the apparatus according to any one of claims 38 to 42.

44. A computer-readable storage medium storing a computer program, wherein when the program is executed by a processor, the method according to any one of claims 1 to 16 is implemented.

45. A beam failure detection apparatus, comprising a memory, a processor, and a computer program that is stored in the memory and that can be run on the processor, wherein when executing the computer program, the processor implements the method according to any one of claims 1 to 16.

46. A beam failure detection apparatus, wherein the apparatus comprises a processor, and the processor is configured to: be coupled to a memory, read an instruction in the memory, and implement the method according to any one of claims 1 to 16 based on the instruction.

47. A computer program product, comprising a computer program instruction, wherein when the computer program instruction is run on a computer, the computer is enabled to perform the method according to any one of claims 1 to 16.

48. A beam failure detection apparatus, wherein the apparatus is configured to implement the method according to any one of claims 1 to 16.
